(19) Europäisches Patentamt
European Patent Office
Office européen des brevets

(11) **EP 3 843 196 B1**

(12) **EUROPEAN PATENT SPECIFICATION**

(45) Date of publication and mention
of the grant of the patent:
**22.11.2023 Bulletin 2023/47**

(21) Application number: **19945475.2**

(22) Date of filing: **21.10.2019**

(51) International Patent Classification (IPC):
**H01M 10/44** *(2006.01)*    **H02J 7/00** *(2006.01)*

(52) Cooperative Patent Classification (CPC):
**H02J 7/00712; H01M 10/44; H02J 7/0071;**
Y02E 60/10

(86) International application number:
**PCT/CN2019/112387**

(87) International publication number:
**WO 2021/077274 (29.04.2021 Gazette 2021/17)**

(54) **CHARGING METHOD, ELECTRONIC APPARATUS, AND STORAGE MEDIUM**

LADEVERFAHREN, ELEKTRONISCHE VORRICHTUNG UND SPEICHERMEDIUM

PROCÉDÉ DE CHARGE, DISPOSITIF ÉLECTRONIQUE ET SUPPORT D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.06.2021 Bulletin 2021/26**

(73) Proprietor: **Ningde Amperex Technology Ltd.
Ningde City, Fujian 352100 (CN)**

(72) Inventors:
• **GUAN, Ting
Ningde, Fujian 350900 (CN)**
• **ZHU, Shan
Ningde, Fujian 350900 (CN)**

• **WU, Fei
Ningde, Fujian 350900 (CN)**

(74) Representative: **Icosa
83 avenue Denfert-Rochereau
75014 Paris (FR)**

(56) References cited:
**EP-A1- 2 947 748          CN-A- 105 552 465
CN-A- 105 552 465          CN-A- 105 870 526
CN-A- 106 532 160          CN-A- 107 171 035
US-A1- 2002 070 708          US-A1- 2014 320 089
US-A1- 2015 123 621**

**Description**

**TECHNICAL FIELD**

This application relates to the field of battery technologies, and in particular, to a method of charging a battery, an electronic apparatus, and a storage medium.

**BACKGROUND**

At present, a common method for charging a lithium battery is to continuously charge the lithium-ion battery with a preset constant current to a voltage (which may be understood as a charging limit voltage), and then constant-voltage charge the lithium-ion battery with this voltage to a fully charged state. In this case, impedance of the battery increases as charge cycles and usage time of the battery increase. This shortens constant-current charge time of the battery and prolongs constant-voltage charge time, resulting in an increase in total charge time of the battery.

In the prior art, the patent application EP 2 947 748 relates to a battery charging method comprising the following steps: (a) obtaining the voltage capacity ratios values, corresponding to a ratio of a voltage variance to a capacity variance depending on a change in state of charge (SOC) of a battery when said battery is charged at a C-rate, wherein said values are obtained for a reference charge C-rate and for higher charge C-rates; (b) comparing, for different SOC sections, the value obtained for the reference charge C-rate to the values obatained for higher charge C-rates et then setting a charge C-rate for each SOC sections so that the value of the difference is within a preset range for each of the SOC sections; and (c) charging the battery with the charge C-rate that is set for each of the SOC sections. The patent application US 2014/0320089 discloses a charging algorithm of lithium-ion batteries that comprises at least one final charging stage after the battery voltage reached a maximum charging voltage which can't be, in each cycle, greater than an absolute highest charging voltage of respective battery design or chemistry and lower than a lowest charging voltage, wherein said maximum charging voltage in each cycle is variable between said absolute highest charging voltage and said lowest charging voltage. The patent application CN105552465 discloses an optimized charging method for lithium-ion batteries based on the calculation of the maximum charging current and using the boundary condition that this maximum current is selected as optimization charging current. The patent application US 2015/0123621 relates to a charging method of a secondary battery comprising: a first charging step of charging the secondary battery at a first C-rate from an initial charge voltage to a first charge voltage and a second charging step of charging the secondary battery to a target voltage while gradually decreasing a C-rate within a range not exceeding the first C-rate after the voltage of the secondary battery reached the first charge voltage.

**SUMMARY**

In view of this, it is necessary to provide a charging method, an electronic apparatus, and a storage medium, to shorten full charge time of a battery and avoid overcharge of the battery.

The invention provides a method of charging a battery, and the method includes:
in an $m^{th}$ charge and discharge cycle, constant-current charging the battery with a first charging current $I_m$ until a first state of charge $SOC_1$ of the battery is reached, where the battery has a corresponding first cut-off voltage $V_1$; constant-current charging the battery with a second charging current $I_n$ until a second state of charge $SOC_2$ of the battery is reached, where the battery has a second cut-off voltage $V_2$ at the end of constant-current charging; and constant-voltage charging the battery with the second cut-off voltage $V_2$ to a fully charged state, where $I_m=I_n+k\times I_n$, $0<k\leq1$, n is an integer greater than or equal to 0, m is an integer that is greater than or equal to 2 and that is greater than n by at least two, and k has different values in at least two charge and discharge cycles; $I_n$ is a charging current of the battery or of another battery, which has the same model of the battery in charge, in a constant-current charging phase of an $n^{th}$ charge and discharge cycle, or a preset value. In the constant-current charging phase of the $n^{th}$ charge and discharge cycle, the battery is constant-current charged only with the second charging current $I_n$ to a charging limit voltage $U_{cl}$, or the battery is constant-current charged only with the second charging current $I_n$ to a third state of charge $SOC_3$, and has a third cut-off voltage $V_3$ corresponding to the third state of charge $SOC_3$. $SOC_1$ is a state of charge of the battery or of another battery, which has the same model of the battery in charge, that is constant-current charged to the charging limit voltage $U_{cl}$ in an $(m-1)^{th}$ charge and discharge cycle, where $SOC_1\leq SOC_3+S$, $SOC_3-S\leq SOC_2\leq SOC_3+S\leq100\%$, and $0\leq S\leq10\%$.

According to some embodiments of this application, $SOC_3$ is alternatively a state of charge of another battery, which has the same model of the battery in charge, at the end of the constant-current charging phase of the $n^{th}$ charge and discharge cycle, or a preset value.

According to some embodiments of this application, k satisfies the following formula: $k=k_1\times m+k_2$, where $0\leq k_1\leq0.001$, and $0\leq k_2\leq0.2$.

According to some embodiments of this application, the first charging current $I_m$ satisfies the following formula:

$I_m=I_n+(U_{m-1}-U_n)/R_a$, where m> 1; or $I_m=I_{m-1}+(U_{m-1}-U_{m-2})/R_a$, where m>2, where $U_n$ is a first anode potential of the battery or another battery identical to the battery that is constant-current charged to the charging limit voltage $U_{cl}$ in the $n^{th}$ charge and discharge cycle, $U_{m-1}$ is a second anode potential of the battery or another battery identical to the battery that is constant-current charged to the charging limit voltage $U_{cl}$ in the $(m-1)^{th}$ charge and discharge cycle, $R_a$ is anode impedance of the battery or another battery identical to the battery in the $n^{th}$ charge and discharge cycle, $I_{m-1}$ is a charging current of the battery or another battery identical to the battery in a constant-current charging phase of the $(m-1)^{th}$ charge and discharge cycle or a preset value, and $U_{m-2}$ is a third anode potential of the battery or another battery identical to the battery that is constant-current charged to the charging limit voltage $U_{cl}$ in an $(m-2)^{th}$ charge and discharge cycle.

According to some embodiments of this application, when the battery is constant-current charged with the first charging current $I_m$ to the first state of charge $SOC_1$, a battery capacity is $Q_m$, where $Q_m=SOC_1\times Q$, and Q is a current actual capacity of the battery.

According to some embodiments of this application, the method further includes, after constant-current charging the battery with the first charging current $I_m$ to the first state of charge $SOC_1$: constant-voltage charging the battery with the first cut-off voltage $V_1$ to the second charging current $I_n$.

According to some embodiments of this application, the method further includes: comparing a magnitude of the third cut-off voltage $V_3$ with that of the charging limit voltage $U_{cl}$; and determining a charging mode of the battery before the $m^{th}$ charge and discharge cycle based on a comparison result; wherein the step of determining a charging mode of the battery before the $m^{th}$ charge and discharge cycle based on a comparison result includes: a first charging step, when the third cut-off voltage $V_3$ is less than the charging limit voltage $U_{cl}$ in the $n^{th}$ charge and discharge cycle, continuing constant-current charging the battery with the second charging current $I_n$ to the charging limit voltage $U_{cl}$, and constant-voltage charging the battery with the charging limit voltage $U_{cl}$ to the fully charged state, where n≤m-1; a second charging step, after entering a next charge and discharge cycle, constant-current charging the battery with the second charging current $I_n$ to the third state of charge $SOC_3$, where the battery has the corresponding third cut-off voltage $V_3$; and a repeating step, repeating the first charging step and the second charging step until the third cut-off voltage $V_3$ is greater than or equal to the charging limit voltage $U_{cl}$.

According to some embodiments of this application, the step of determining a charging mode of the battery before the $m^{th}$ charge and discharge cycle based on a comparison result further includes: when the third cut-off voltage $V_3$ is greater than or equal to the charging limit voltage $U_{cl}$, constant-voltage charging the battery with the third cut-off voltage $V_3$ to the fully charged state, obtaining the first state of charge $SOC_1$, and calculating the first charging current $I_m$.

According to some embodiments of this application, the method further includes: obtaining a fourth state of charge $SOC_4$ of the battery that is constant-current charged until a battery voltage is the charging limit voltage $U_{cl}$ in the $n^{th}$ charge and discharge cycle; comparing a magnitude of the third state of charge $SOC_3$ with that of the fourth state of charge $SOC_4$; and determining a charging mode of the battery before the $m^{th}$ charge and discharge cycle based on a comparison result.

According to some embodiments of this application, the step of determining a charging mode of the battery before the $m^{th}$ charge and discharge cycle based on a comparison result includes: a charging step, when the third state of charge $SOC_3$ is less than the fourth state of charge $SOC_4$ in the $n^{th}$ charge and discharge cycle, after entering a next charge and discharge cycle, constant-current charging the battery with the second charging current $I_n$ to the charging limit voltage $U_{cl}$, where the battery has the corresponding fourth state of charge $SOC_4$, and constant-voltage charging the battery with the charging limit voltage $U_{cl}$ to the fully charged state, where n≤m-1; and a repeating step, repeating the charging step until the third state of charge $SOC_3$ is greater than or equal to the fourth state of charge $SOC_4$.

According to some embodiments of this application, the step of determining a charging mode of the battery before the $m^{th}$ charge and discharge cycle based on a comparison result includes: when the third state of charge $SOC_3$ is greater than or equal to the fourth state of charge $SOC_4$, obtaining the first state of charge $SOC_1$, and calculating the first charging current $I_m$.

Another embodiment of this application provides a method of charging a battery, and the method includes: in an $m^{th}$ charge and discharge cycle, constant-current charging the battery with a first charging current $I_m$ to a first cut-off voltage $V_1$, constant-current charging the battery with a second charging current $I_n$ to a second cut-off voltage $V_2$, and constant-voltage charging the battery with the second cut-off voltage $V_2$ to a fully charged state, where $I_m=I_n+k\times I_n$, $0<k\le1$, $k=k_1\times m+k_2$, $0\le k_1\le0.002$, $0\le k_2\le1$, and k has different values in at least two charge and discharge cycles; and $I_n$ is a preset value, or $I_n$ is a charging current of the battery or another battery identical to the battery in a constant-current charging phase of an $n^{th}$ charge and discharge cycle. In the constant-current charging phase of the $n^{th}$ charge and discharge cycle, the battery is constant-current charged only with the second charging current $I_n$ to a third cut-off voltage $V_3$, where $V_1=U_{cl}+b$, $V_2=U_{cl}+b$, $0\le b\le0.5$, $U_{cl}$ is a charging limit voltage of the battery or another battery, or a preset value, n is an integer greater than or equal to 0, m is an integer that is greater than or equal to 2 and that is greater than n by at least two, and b has different values in at least two charge and discharge cycles.

According to some embodiments of this application, the first charging current $I_m$ satisfies the following formula: $I_m=I_n+(U_{m-1}-U_n)/R_a$, where m>1; or $I_m=I_{m-1}+(U_{m-1}-U_{m-2})/R_a$, where m>2, where $U_n$ is a first anode potential of the battery or another battery identical to the battery that is constant-current charged to the charging limit voltage $U_{cl}$ in the $n^{th}$ charge and discharge cycle, $U_{m-1}$ is a second anode potential of the battery or another battery identical to the battery that is constant-current charged to the charging limit voltage $U_{cl}$ in an $(m-1)^{th}$ charge and discharge cycle, $R_a$ is anode impedance of the battery or another battery identical to the battery in the $n^{th}$ charge and discharge cycle, $I_{m-1}$ is a charging current of the battery or another battery identical to the battery in a constant-current charging phase of the $(m-1)^{th}$ charge and discharge cycle, or a preset value, and $U_{m-2}$ is a third anode potential of the battery or another battery identical to the battery that is constant-current charged to the charging limit voltage $U_{cl}$ in an $(m-2)^{th}$ charge and discharge cycle.

According to some embodiments of this application, b satisfies the following formula: $b=b_1 \times m+b_2$, $0 \leq b_1 \leq 0.0005$, and $0 \leq b_2 \leq 0.1$.

According to some embodiments of this application, the first cut-off voltage $V_1$ is alternatively obtained in the following method: obtaining battery impedance R of the battery in the $(m-1)^{th}$ charge and discharge cycle; and determining the first cut-off voltage $V_1$ based on the charging limit voltage $U_{cl}$, the battery impedance R, the first charging current $I_m$, and the second charging current $I_n$.

According to some embodiments of this application, the first cut-off voltage $V_1$ satisfies the following formula: $V_1=U_{cl}+R \times (I_m-I_n)$.

According to some embodiments of this application, the second cut-off voltage $V_2$ and $V_3$ satisfy the following formulas respectively: $V_2=OCV_1+(U_{cl}-OCV_1) \times K_1$, where $OCV_1$ is a first open-circuit voltage of the battery or another battery at the end of a constant-current charging phase of an $x^{th}$ charge and discharge cycle, $K_1$ is an impedance growth rate of the battery or another battery, $1 \leq x < m-1$; and $V_3=OCV_2+(U_{cl}-OCV_2) \times K_2$, where $OCV_2$ is a second open-circuit voltage of the battery or another battery at the end of a constant-current charging phase of the $y^{th}$ charge and discharge cycle, $K_2$ is an impedance growth rate of the battery or another battery, and $1 \leq y < n-1$.

According to some embodiments of this application, the method further includes: constant-voltage charging the battery with the first cut-off voltage $V_1$ to the second charging current $I_n$.

According to some embodiments of this application, the method further includes: comparing a magnitude of the third cut-off voltage $V_3$ with that of the charging limit voltage $U_{cl}$; and determining a charging mode of the battery before the $m^{th}$ charge and discharge cycle based on a comparison result.

According to some embodiments of this application, the step of determining a charging mode of the battery before the $m^{th}$ charge and discharge cycle based on a comparison result includes: a first charging step, when the third cut-off voltage $V_3$ is less than the charging limit voltage $U_{cl}$ in the $n^{th}$ charge and discharge cycle, continuing constant-current charging the battery with the second charging current $I_n$ to the charging limit voltage $U_{cl}$, and constant-voltage charging the battery with the charging limit voltage $U_{cl}$ to the fully charged state, where $n \leq m-1$; a second charging step, after entering a next charge and discharge cycle, constant-current charging the battery with the second charging current $I_n$ to the third cut-off voltage $V_3$; and a repeating step, repeating the first charging step and the second charging step until the third cut-off voltage $V_3$ is greater than or equal to the charging limit voltage $U_{cl}$.

According to some embodiments of this application, the step of determining a charging mode of the battery before the $m^{th}$ charge and discharge cycle based on a comparison result further includes: when the third cut-off voltage $V_3$ is greater than or equal to the charging limit voltage Uci, constant-voltage charging the battery with the third cut-off voltage $V_3$ to the fully charged state, and calculating the first charging current $I_m$.

The invention further provides an electronic apparatus, where the electronic apparatus includes a battery, a charging system and a processor; wherein the battery is connected to the processor through the charging system, and the processor is configured to load and perform the method as described above.

The invention further provides a storage medium storing at least one computer instruction, where the computer instruction is loaded by a processor and used to perform the method of charging a battery described above.

According to the method of charging a battery according to the invention, constant-current charge time of the battery is shortened by increasing a charging current of the battery in a constant-current charging phase, thereby shortening total charge time of the battery. In addition, according to the method, the total charge time of the battery can be further shortened by increasing a cut-off voltage of the battery in the constant-current charging phase. In this way, the method of charging a battery, the electronic apparatus, and the storage medium according to the invention can shorten full charge time of a battery and avoid overcharge of the battery.

## BRIEF DESCRIPTION OF DRAWINGS

FIG. 1 is a schematic structural diagram of an electronic apparatus according to an embodiment of this application.
FIG. 2 is a flowchart of a method of charging a battery according to an embodiment of this application.
FIG. 3 is a flowchart of a method of charging a battery according to another embodiment of this application.
FIG. 4 is a flowchart of a method of charging a battery according to another embodiment of this application.

FIG. 5 is a flowchart of a method of charging a battery according to another embodiment of this application.
FIG. 6 is a flowchart of a method of charging a battery according to another embodiment of this application.
FIG. 7 is a flowchart of a method of charging a battery according to another embodiment of this application.
FIG. 8 is a flowchart of a method of charging a battery according to another embodiment of this application.
FIG. 9 is a flowchart of a method of charging a battery according to another embodiment of this application.
FIG. 10 is a flowchart of a method of charging a battery according to another embodiment of this application.
FIG. 11 is a modular diagram of a charging system according to an embodiment of this application.

Reference numerals of main components:

| | |
|---|---|
| Electronic apparatus | 100 |
| Charging system | 10 |
| Processor | 11 |
| Battery | 13 |
| Obtaining module | 101 |
| Comparing module | 102 |
| Determining module | 103 |
| Constant-current charging module | 104 |
| Constant-voltage charging module | 105 |

This application is further described in detail with reference to the accompanying drawings in the following specific embodiments.

# DESCRIPTION OF EMBODIMENTS

The following clearly describes the technical solutions in embodiments of this application with reference to the accompanying drawings in the embodiments of this application. Apparently, the described embodiments are some but not all of the embodiments of this application.

All other embodiments obtained by a person of ordinary skill in the art based on the embodiments of this application without creative efforts shall fall within the protection scope of this application, as defined by the appended claims.

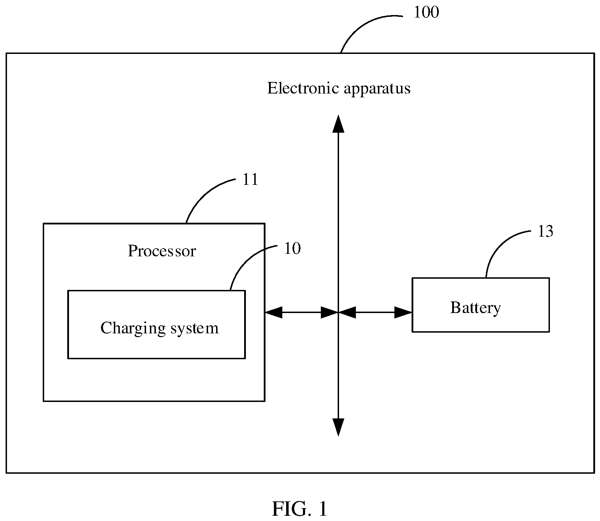

Referring to FIG. 1, a charging system 10 runs in an electronic apparatus 100. The electronic apparatus 100 includes, but is not limited to, a processor 11 and a battery 13. The foregoing components may be connected by a bus or directly connected.

It should be noted that FIG. 1 shows only an example of the electronic apparatus 100. In other embodiments, the electronic apparatus 100 may alternatively include more or fewer components, or have different component configurations. The electronic apparatus 100 may be an electric motorcycle, an electric bicycle, an electric car, a mobile phone, a tablet computer, a personal digital assistant, a personal computer, or any other suitable rechargeable devices.

In an embodiment, the battery 13 is a rechargeable battery configured to supply electrical energy to the electronic apparatus 100. For example, the battery 13 may be a lead-acid battery, a nickel-cadmium battery, a nickel-hydrogen battery, a lithium-ion battery, a lithium polymer battery, or the like. The battery 13 is logically connected to the processor 11 through the charging system 10, so that functions such as charge, discharge, and power consumption management are implemented through the charging system 10. The battery 13 includes a battery cell (not shown in the figure).

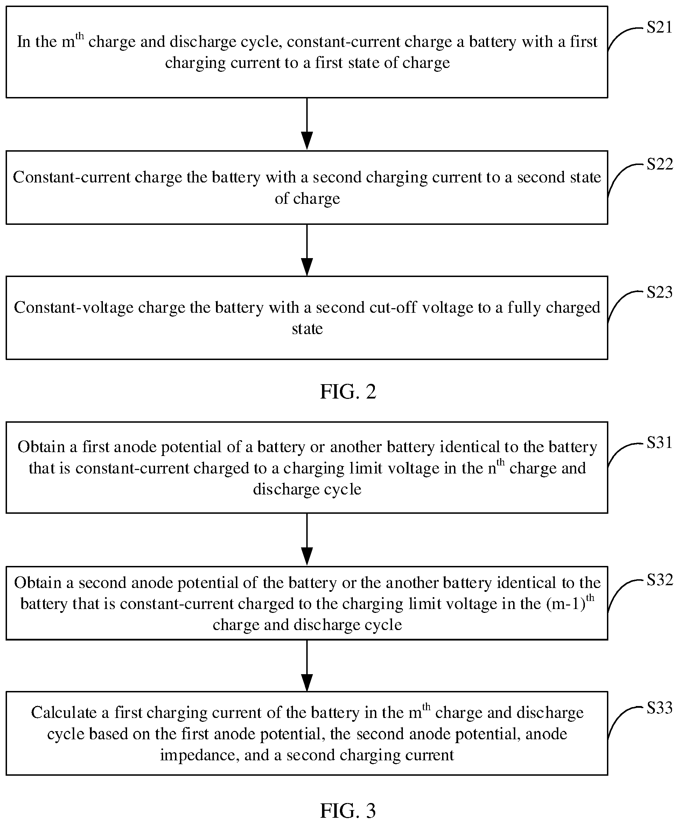

FIG. 2 is a flowchart of a method of charging a battery according to an embodiment of this application. In the method, a constant-current charging phase ends when a state of charge (SOC, state of charge) is reached. The method of charging a battery may include the following steps.

Step S21: In an $m^{th}$ charge and discharge cycle, constant-current charge the battery with a first charging current $I_m$ to a first state of charge $SOC_1$.

In the $m^{th}$ charge and discharge cycle, the charging system 10 in this embodiment constant-current charges the battery 13 with the first charging current $I_m$ to the first state of charge $SOC_1$, where the battery 13 has a corresponding first cut-off voltage $V_1$.

In this embodiment, $SOC_1$ is a state of charge of the battery 13 or another battery (for example, a battery with a same model) identical to the battery 13 that is constant-current charged to a charging limit voltage $U_{cl}$ in an $(m-1)^{th}$ charge and discharge cycle, where $U_{cl}$ may be understood as the charging limit voltage as described in Background, or a charging limit voltage indicated by battery product information.

In this embodiment, $I_m$ satisfies the following formula:

$$I_m = I_n + k \times I_n \qquad (1)$$

where $0 < k \leq 1$, and k may vary with a quantity of charge and discharge cycles, that is, in different charge and discharge cycles, k may have different values, and the resulting first charging current $I_m$ may also be different, or in different charge and discharge cycles, the first charging current $I_m$ may be the same or different; and

n is an integer greater than or equal to 0, m is an integer that is greater than or equal to 2and that is greater than n by at least two, and k have different values in at least two charge and discharge cycles, that is, different first charging currents $I_m$ are used in the at least two charge and discharge cycles.

In this embodiment, k satisfies the following formula:

$$k = k_1 \times m + k_2 \qquad (2)$$

where $0 \leq k_1 < 0.001$, and $0 \leq k_2 \leq 0.2$.Formula (2) indicates that the value of k may vary with a quantity of cycles m, that is, in different charge and discharge cycles, the value of k may be the same or different.

In a preferred embodiment, $I_n$ is a charging current of the battery 13 or another battery (for example, a battery with a same model) identical to the battery 13 in a constant-current charging phase of the $n^{th}$ charge and discharge cycle. In another preferred embodiment, the second charging current $I_n$ may alternatively be a preset value.

In an embodiment of this application, when the charging system 10 constant-current charges the battery 13 with the first charging current $I_m$ to the first state of charge $SOC_1$, a battery capacity is $Q_m$.

In this embodiment, $Q_m$ satisfies the following formula:

$$Q_m = SOC_1 \times Q \qquad (3)$$

where Q is a current actual capacity of the battery 13.

In this embodiment, the charging system 10 is further configured to obtain a discharge capacity or a current actual capacity of the battery 13 in each charge and discharge cycle.

Specifically, the current actual capacity of the battery 13 in each charge and discharge cycle is a real battery capacity of the battery 13 in the corresponding charge and discharge cycle, that is, a maximum capacity of the battery 13 from a fully charged state to a fully discharged state in each cycle process of the battery 13. The discharge capacity may be measured by a coulomb counter.

The charging system 10 obtains the actual capacity of the battery 13 in each charge and discharge cycle, records a temperature, a rate, and the like of the battery, and performs conversion calculation on the actual capacity of the battery 13 based on a known correspondence between capacities and different temperatures and different rates, to obtain the maximum capacity of the battery 13 at an actual charging temperature and charge rate. This maximum capacity is the foregoing actual capacity.

The actual capacity of the battery 13 changes with an increase in usage time or a quantity of charge and discharge cycles of the battery 13, and the actual capacity of the battery is directly related to battery cell aging. Therefore, the charging system 10 may obtain the actual capacity of the battery 13 in each charge and discharge cycle.

In another embodiment, when the charging system 10 constant-current charges the battery 13 with the first charging current $I_m$ to the first state of charge $SOC_1$, the charging system 10 further constant-voltage charges the battery 13 with the first cut-off voltage $V_1$ to the second charging current $I_n$.

Step S22: Constant-current charge the battery with the second charging current $I_n$ to a second state of charge $SOC_2$.

Specifically, the charging system 10 constant-current charges the battery 13 with the second charging current $I_n$ to the second state of charge $SOC_2$, where the battery 13 has a second cut-off voltage $V_2$ at the end of constant-current charging.

In the constant-current charging phase of the $n^{th}$ charge and discharge cycle, the battery 13 is constant-current charged only with the second charging current $I_n$ to the charging limit voltage $U_{cl}$, or the battery is constant-current charged only with the second charging current $I_n$ to a third state of charge $SOC_3$, and has a third cut-off voltage $V_3$ corresponding to the third state of charge $SOC_3$. That is, in the constant-current charging phase of the $n^{th}$ charge and discharge cycle, the battery 13 may be constant-current charged only with the second charging current $I_n$ to the third state of charge $SOC_3$, or the battery 13 may be charged to the charging limit voltage $U_{cl}$ in a conventional method (constant-current charging the battery 13 to the charging limit voltage $U_{cl}$), where $SOC_1 \leq SOC_3 + S$, $SOC_3 - S \leq SOC_2 \leq SOC_3 + S \leq 100\%$, and $0 \leq S \leq 10\%$.In other embodiments, $0 \leq S \leq 5\%$.

In a preferred embodiment, the third state of charge $SOC_3$ may be a state of charge of another battery (that is, a battery with a same model) identical to the battery 13 at the end of the constant-current charging phase of the $n^{th}$ charge and discharge cycle. In another preferred embodiment, the third state of charge $SOC_3$ may alternatively be a preset value.

Step S23: Constant-voltage charge the battery with the second cut-off voltage $V_2$ to a fully charged state.

Specifically, in the $m^{th}$ charge and discharge cycle, when the charging system 10 constant-current charges the battery 13 with the second charging current $I_n$ to the second state of charge $SOC_2$, the charging system 10 constant-voltage charges the battery 13 with the second cut-off voltage $V_2$ to the fully charged state, to ensure that lithium plating and overcharge do not occur on the battery 13.

Referring to FIG. 3, in another embodiment, the charging system 10 may further determine the first charging current $I_m$ of the battery 13 in the $m^{th}$ charge and discharge cycle in the following steps. The specific steps are as follows.

Step S31: Obtain a first anode potential $U_n$ of the battery or another battery identical to the battery that is constant-current charged to the charging limit voltage $U_{cl}$ in the $n^{th}$ charge and discharge cycle.

Specifically, the charging system 10 is configured to obtain an anode non-polarization charging curve and anode impedance of the battery 13 in the $n^{th}$ charge and discharge cycle, and the corresponding second charging current $I_n$ of the battery 13 at the end of the constant-current charging phase.

In a preferred embodiment, anode impedance $R_a$ of the battery 13 or another battery identical to the battery in the $n^{th}$ charge and discharge cycle may be obtained through an impedance test.

In this embodiment, the anode non-polarization charging curve may represent a mapping relationship between a state of charge of the battery 13 and an anode potential corresponding to the state of charge in a charging process in which the battery 13 is charged with a small rate (for example, 0.01 C).

Therefore, the charging system 10 may obtain, based on the anode non-polarization charging curve, the corresponding first anode potential $U_n$ of the battery 13 or another battery identical to the battery that is constant-current charged to the charging limit voltage $U_{cl}$ (which may be understood as the charging limit voltage described in Background) in the $n^{th}$ charge and discharge cycle.

Step S32: Obtain a second anode potential $U_{m-1}$ of the battery or another battery identical to the battery that is constant-current charged to the charging limit voltage $U_{cl}$ in an $(m-1)^{th}$ charge and discharge cycle.

Specifically, the charging system 10 is configured to obtain the anode non-polarization charging curve and the anode impedance $R_a$ of the battery 13 in the $n^{th}$ charge and discharge cycle. The charging system 10 may obtain, based on the anode non-polarization charging curve, the corresponding second anode potential $U_{m-1}$ of the battery 13 or another battery identical to the battery that is constant-current charged to the charging limit voltage $U_{cl}$ in the $(m-1)^{th}$ charge and discharge cycle.

Step S33: Calculate the first charging current $I_m$ of the battery 13 in the $m^{th}$ charge and discharge cycle based on the first anode potential $U_n$, the second anode potential $U_{m-1}$, the anode impedance $R_a$, and the second charging current $I_n$.

In an embodiment, the charging system 10 may calculate the first charging current $I_m$ of the battery in the $m^{th}$ charge and discharge cycle based on the first anode potential $U_n$, the second anode potential $U_{m-1}$, the anode impedance $R_a$, and the second charging current $I_n$, and charge the battery 13 with the first charging current $I_m$. Specifically, the first charging current $I_m$ may be calculated according to the following formula:

$$I_m = I_n + (U_{m-1} - U_n)/R_a \qquad (4)$$

where m is greater than 1. Therefore, the charging system 10 may obtain the first charging current $I_m$ according to the calculation formula (4), and then may charge the battery 13 with the determined first charging current $I_m$.

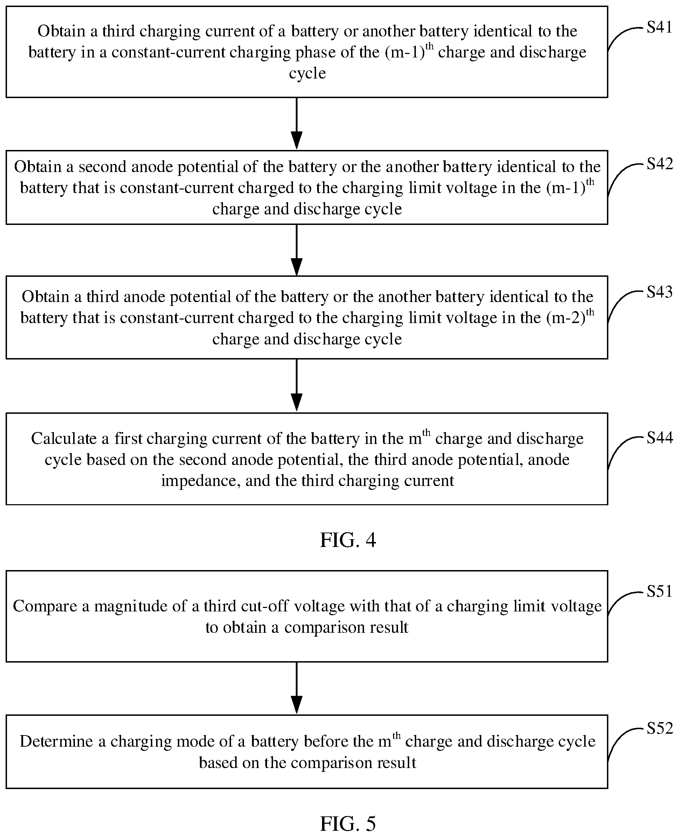

Referring to FIG. 4, in another embodiment, the charging system 10 may further determine the first charging current $I_m$ of the battery 13 in the $m^{th}$ charge and discharge cycle in the following steps. The specific steps are as follows.

Step S41: Obtain a third charging current $I_{m-1}$ of the battery or another battery identical to the battery in a constant-current charging phase of the $(m-1)^{th}$ charge and discharge cycle.

In an embodiment, the charging system 10 is configured to obtain the third charging current $I_{m-1}$ of the battery 13 or another battery identical to the battery 13 in the constant-current charging phase of the $(m-1)^{th}$ charge and discharge cycle. In another preferred embodiment, the third charging current $I_{m-1}$ may alternatively be a preset value.

Step S42: Obtain a second anode potential $U_{m-1}$ of the battery or another battery identical to the battery that is constant-current charged to the charging limit voltage $U_{cl}$ in the $(m-1)^{th}$ charge and discharge cycle.

Specifically, the charging system 10 is configured to obtain an anode non-polarization charging curve and anode impedance $R_a$ of the battery 13 in the $n^{th}$ charge and discharge cycle.

Further, the charging system 10 may obtain, based on the anode non-polarization charging curve, the corresponding second anode potential $U_{m-1}$ of the battery 13 or another battery identical to the battery that is constant-current charged to the charging limit voltage $U_{cl}$ in the $(m-1)^{th}$ charge and discharge cycle.

Step S43: Obtain a third anode potential $U_{m-2}$ of the battery or another battery identical to the battery that is constant-current charged to the charging limit voltage $U_{cl}$ in an $(m-2)^{th}$ charge and discharge cycle.

In this embodiment, the charging system 10 may be configured to obtain, based on the anode non-polarization charging curve, the corresponding third anode potential $U_{m-2}$ of the battery 13 or another battery identical to the battery that is constant-current charged to the charging limit voltage $U_{cl}$ in the $(m-2)^{th}$ charge and discharge cycle.

Step S44: Calculate the first charging current $I_m$ of the battery 13 in the $m^{th}$ charge and discharge cycle based on the second anode potential $U_{m-1}$, the third anode potential $U_{m-2}$, the anode impedance $R_a$, and the third charging current $I_{m-1}$.

In an embodiment, the charging system 10 may calculate the first charging current $I_m$ of the battery in the $m^{th}$ charge and discharge cycle based on the second anode potential $U_{m-1}$, the third anode potential $U_{m-2}$, the anode impedance $R_a$, and the third charging current $I_{m-1}$, and charge the battery 13 with the first charging current $I_m$, where the anode impedance $R_a$ may be measured by using three electrodes, and may be stored in a memory or a processor in advance. Specifically, the first charging current $I_m$ may be calculated according to the following formula:

$$I_m = I_{m-1} + (U_{m-1} - U_{m-2})/R_a \qquad (5)$$

where m is greater than 2. Therefore, the charging system 10 may obtain the first charging current $I_m$ according to the calculation formula (5), and then may charge the battery 13 with the determined first charging current $I_m$.

Referring to FIG. 5, in an embodiment, the charging system 10 may determine a charging mode of the battery 13 before the $m^{th}$ charge and discharge cycle in the following steps. The specific steps are as follows.

Step S51: Compare a magnitude of the third cut-off voltage $V_3$ with that of the charging limit voltage $U_{cl}$ to obtain a comparison result.

In this embodiment, in a charging process of the battery 13, the charging system 10 compares the magnitude of the third cut-off voltage $V_3$ with that of the charging limit voltage $U_{cl}$.

Step S52: Determine the charging mode of the battery before the $m^{th}$ charge and discharge cycle based on the comparison result.

The charging system 10 is configured to determine the charging mode of the battery before the $m^{th}$ charge and discharge cycle based on the comparison result of the third cut-off voltage $V_3$ and the charging limit voltage $U_{cl}$.

In this embodiment, when the third cut-off voltage $V_3$ is less than the charging limit voltage $U_{cl}$, the charging system 10 charges the battery 13 in the following steps. The specific steps are as follows:

in a first charging step, when the third cut-off voltage $V_3$ is less than the charging limit voltage $U_{cl}$ in the $n^{th}$ charge and discharge cycle, the charging system 10 continues constant-current charging the battery 13 with the second charging current $I_n$ to the charging limit voltage $U_{cl}$, and then the charging system 10 constant-voltage charges the battery 13 with the charging limit voltage $U_{cl}$ to the fully charged state, where $n \leq m-1$;
in a second charging step, after entering a next charge and discharge cycle, the charging system 10 constant-current charges the battery 13 with the second charging current $I_n$ to the third state of charge $SOC_3$, where the battery 13 has the corresponding third cut-off voltage $V_3$; and
in a repeating step, the charging system 10 repeats the first charging step and the second charging step until the third cut-off voltage $V_3$ is greater than or equal to the charging limit voltage $U_{cl}$.

In this embodiment, when the third cut-off voltage $V_3$ is greater than or equal to the charging limit voltage $U_{cl}$, the charging system 10 constant-voltage charges the battery 13 with the third cut-off voltage $V_3$ to the fully charged state. In addition, the charging system 10 further obtains the first state of charge $SOC_1$ and calculates the first charging current $I_m$.

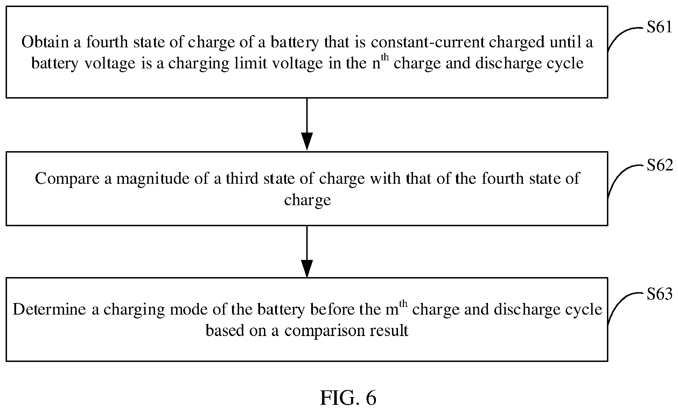

Referring to FIG. 6, in another embodiment, the charging system 10 may further determine a charging mode of the battery 13 before the $m^{th}$ charge and discharge cycle in the following steps. The specific steps are as follows.

Step S61: Obtain a fourth state of charge $SOC_4$ of the battery that is constant-current charged until a battery voltage is the charging limit voltage $U_{cl}$ in the $n^{th}$ charge and discharge cycle.

In this embodiment, the charging system 10 obtains the fourth state of charge $SOC_4$ of the battery 13 that is constant-current charged until the battery voltage is the charging limit voltage $U_{cl}$ in the $n^{th}$ charge and discharge cycle.

Step S62: Compare a magnitude of the third state of charge $SOC_3$ with that of the fourth state of charge $SOC_4$.

In this embodiment, in a charging process of the battery 13, the charging system 10 compares the magnitude of the third state of charge $SOC_3$ with that of the fourth state of charge $SOC_4$.

Step S63: Determine the charging mode of the battery before the $m^{th}$ charge and discharge cycle based on a comparison result.

The charging system 10 is configured to determine the charging mode of the battery before the $m^{th}$ charge and discharge cycle based on the comparison result of the third state of charge $SOC_3$ and the fourth state of charge $SOC_4$.

In this embodiment, when the third state of charge $SOC_3$ is less than the fourth state of charge $SOC_4$, the charging system 10 charges the battery 13 in the following steps. The specific steps are as follows:

in a charging step, when the third state of charge $SOC_3$ is less than the fourth state of charge $SOC_4$ in the $n^{th}$ charge and discharge cycle, after entering a next charge and discharge cycle, constant-current charging the battery 13 with the second charging current $I_n$ to the charging limit voltage $U_{cl}$, where the battery has the corresponding fourth state of charge $SOC_4$, and then constant-voltage charging the battery with the charging limit voltage $U_{cl}$ to the fully charged state, where $n \leq m-1$; and

in a repeating step, repeating the charging step until the third state of charge $SOC_3$ is greater than or equal to the fourth state of charge $SOC_4$.

In this embodiment, when the third state of charge $SOC_3$ is greater than or equal to the fourth state of charge $SOC_4$, the charging system 10 further obtains the first state of charge $SOC_1$ and calculates the first charging current $I_m$.

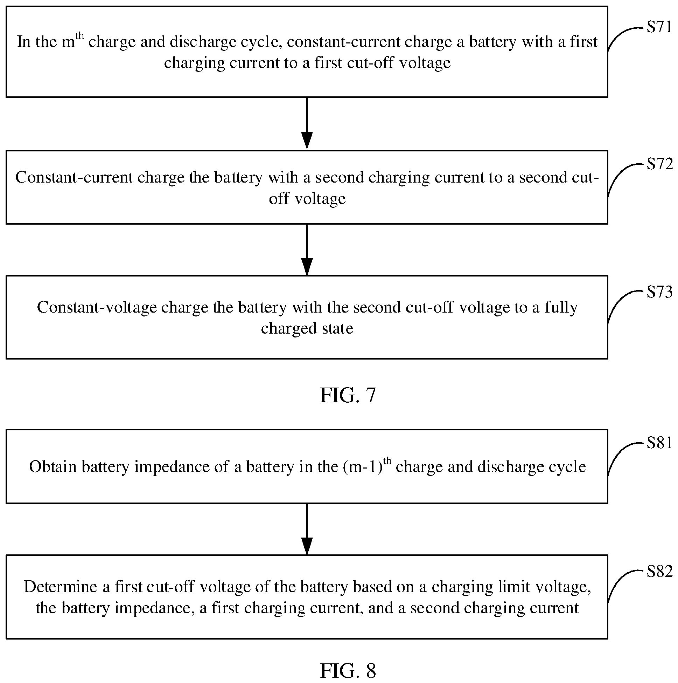

FIG. 7 is a flowchart of a method of charging a battery according to another embodiment of this application. In the method, a constant-current charging phase ends when a voltage is reached. The method in this embodiment may include the following steps.

Step S71: In the $m^{th}$ charge and discharge cycle, constant-current charge the battery with a first charging current $I_m$ to a first cut-off voltage $V_1$.

In the $m^{th}$ charge and discharge cycle, the charging system 10 in this embodiment constant-current charges the battery 13 with the first charging current $I_m$ to the first cut-off voltage $V_1$.

In this embodiment, the first charging current $I_m$ satisfies the following formula:

$$I_m = I_n + k \times I_n \qquad (6)$$

where $0 < k \leq 1$, and k has different values in at least two charge and discharge cycles.

In this embodiment, k satisfies the following formula:

$$k = k_1 \times m + k_2 \qquad (7)$$

where $0 \leq k_1 \leq 0.002$, and $0 \leq k_2 \leq 1$. Formula (7) can indicate that the value of k may vary with a quantity of cycles m, that is, in different charge and discharge cycles, the value of k may be the same or different.

In another embodiment, the charging system 10 may further constant-voltage charge the battery 13 with the first cut-off voltage $V_1$ to a second charging current $I_n$.

Step S72: Constant-current charge the battery with the second charging current $I_n$ to a second cut-off voltage $V_2$.

In this embodiment, the charging system 10 constant-current charges the battery 13 with the second charging current $I_n$ to the second cut-off voltage $V_2$.

In this embodiment, $I_n$ is a charging current of the battery 13 or another battery (for example, a battery with a same model) identical to the battery 13 in a constant-current charging phase of an $n^{th}$ charge and discharge cycle, and in the constant-current charging phase of the $n^{th}$ charge and discharge cycle, the battery 13 is constant-current charged with the second charging current $I_n$ to a third cut-off voltage $V_3$. In another embodiment, the second charging current $I_n$ may alternatively be a preset value.

In this embodiment, the first cut-off voltage $V_1$ and the second cut-off voltage $V_2$ may satisfy the following formulas respectively:

$$V_1 = U_{cl} + b \qquad (8)$$

$$V_2 = U_{cl} + b \qquad (9)$$

where $0 \leq b \leq 0.5$, and b has different values in at least two charge and discharge cycles.

$U_{cl}$ is a charging limit voltage of the battery 13 or another battery identical to the battery, or a preset value, n is an integer greater than or equal to 0, and m is an integer that is greater than or equal to 2 and that is greater than n by at least two.

In this embodiment, b satisfies the following formula:

$$b=b_1 \times m + b_2 \qquad (10)$$

where $0 \leq b_1 \leq 0.0005$, and $0 \leq b_2 \leq 0.1$. Formula (10) can indicate that the value of b may vary with the quantity of cycles m, that is, in different charge and discharge cycles, the value of b may be the same or different.

Step S73: Constant-voltage charge the battery with the second cut-off voltage $V_2$ to a fully charged state.

In this embodiment, the charging system 10 constant-current charges the battery 13 with the second cut-off voltage $V_2$ to the fully charged state.

Referring to FIG. 8, in another embodiment, the charging system 10 may further determine the first cut-off voltage $V_1$ in the following steps. The specific steps are as follows.

Step S81: Obtain battery impedance R of the battery in an $(m-1)^{th}$ charge and discharge cycle.

In an embodiment, the charging system 10 is configured to obtain the battery impedance R of the battery 13 in the $(m-1)^{th}$ charge and discharge cycle.

Step S82: Determine the first cut-off voltage $V_1$ of the battery based on the charging limit voltage $U_{cl}$, the battery impedance R, the first charging current $I_m$, and the second charging current $I_n$.

Specifically, in an embodiment, the charging system 10 may calculate the first cut-off voltage $V_1$ according to the following formula:

$$V_1 = U_{cl} + R \times (I_m - I_n) \qquad (11)$$

where R is the battery impedance of the battery in the $(m-1)^{th}$ charge and discharge cycle, and may be battery impedance in a charging process or battery impedance in a discharging process. Therefore, the charging system 10 may calculate the first cut-off voltage $V_1$ according to formula (11), and then may use the first cut-off voltage $V_1$ to end the constant-current charging phase of the battery 13 in the $m^{th}$ charge and discharge cycle.

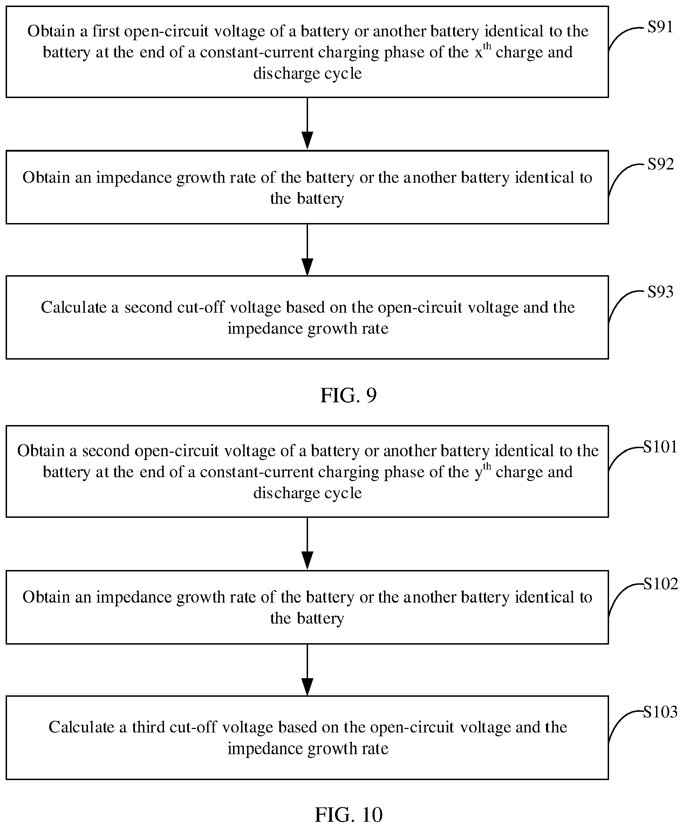

Referring to FIG. 9, in another embodiment, the charging system 10 may further determine the second cut-off voltage $V_2$ in the following steps. The specific steps are as follows.

Step S91: Obtain a first open-circuit voltage $OCV_1$ of the battery or another battery identical to the battery at the end of a constant-current charging phase of the $x^{th}$ charge and discharge cycle, where $1 \leq x < m-1$.

In an embodiment, the charging system 10 obtains the open-circuit voltage $OCV_1$ of the battery at the end of the constant-current charging phase of the $n^{th}$ charge and discharge cycle.

Specifically, the charging system 10 obtains a first open-circuit voltage-state of charge correspondence and a battery voltage-state of charge correspondence of the battery 13 or another battery identical to the battery.

Further, the charging system 10 further obtains, based on the open-circuit voltage-state of charge correspondence and the battery voltage-state of charge correspondence of the battery 13, the first open-circuit voltages $OCV_1$ of the battery 13 at charge rates corresponding to different temperatures at the end of the constant-current charging phase of the $x^{th}$ charge and discharge cycle. That is, the charging system 10 obtains, based on the foregoing two correspondences, the first open-circuit voltage $OCV_1$ of the battery 13 at a charge rate corresponding to an ambient temperature in the $x^{th}$ charge and discharge cycle.

The open-circuit voltage-state of charge correspondence of the battery 13 describes a mapping relationship, established in advance, between an open-circuit voltage and a state of charge of the battery that are collected before charging the battery 13. The battery voltage-state of charge correspondence of the battery 13 describes a mapping relationship, established in advance, between a voltage and a state of charge of the battery that are collected before charging the battery 13.

Therefore, the first open-circuit voltages $OCV_1$ of the battery at different temperatures at the end of a constant-current charging phase of each charge and discharge cycle can be obtained.

Step S92: Obtain an impedance growth rate $K_1$ of the battery or another battery identical to the battery.

Specifically, in this embodiment, the charging system 10 obtains battery impedance of the battery 13 at different temperatures in the $x^{th}$ charge and discharge cycle and, and denotes the battery impedance as first battery impedance $R_1$.

Therefore, the charging system 10 may obtain battery impedance of the battery in any state of charge at different temperatures.

In this embodiment, the charging system 10 further obtains battery impedance of the battery 13 in the $(m-1)^{th}$ charge and discharge cycle, and denotes the battery impedance as second battery impedance $R_2$, where $1 \leq x < m-1$.

The charging system 10 may determine the impedance growth rate of the battery 13 based on the first battery impedance $R_1$ and the second battery impedance $R_2$.

Specifically, the charging system 10 determines the impedance growth rate $K_1$ of the battery 13 by obtaining the first battery impedance $R_1$ and the second battery impedance $R_2$ at a same temperature in a same state of charge.

In this embodiment, the impedance growth rate of the battery 13 is denoted as $K_1$, and $K_1$ satisfies the following formula:

$$K_1=R_2/R_1 \qquad (12)$$

Step S93: Calculate the second cut-off voltage based on the open-circuit voltage $OCV_1$ and the impedance growth rate $K_1$.

Specifically, the second cut-off voltage $V_2$ satisfies the following formula:

$$V_2=OCV_1+(U_{cl}-OCV_1)\times K_1 \qquad (13)$$

Referring to FIG. 10, in an embodiment, the charging system 10 may determine the third cut-off voltage $V_3$ in the following steps. The specific steps are as follows.

Step S101: Obtain a second open-circuit voltage $OCV_2$ of the battery or another battery identical to the battery at the end of a constant-current charging phase of the $y^{th}$ charge and discharge cycle, where $1 \leq y < n-1$.

In an embodiment, the charging system 10 may obtain, based on the established open-circuit voltage-state of charge mapping relationship, the second open-circuit voltage $OCV_2$ of the battery at the end of the constant-current charging phase of the $y^{th}$ charge and discharge cycle.

Step S 102: Obtain an impedance growth rate $K_2$ of the battery or another battery identical to the battery.

Step S103: Calculate the third cut-off voltage $V_3$ based on the open-circuit voltage $OCV_2$ and the impedance growth rate $K_2$.

Specifically, the third cut-off voltage $V_3$ satisfies the following formula:

$$V_3=OCV_2+(U_{cl}-OCV_2)\times K_2 \qquad (14)$$

where $K_2=R_4/R_3$, $R_3$ is third battery impedance of the battery 13 at a same temperature in a same state of charge in the $y^{th}$ charge and discharge cycle, and $R_4$ is fourth battery impedance of the battery 13 at a same temperature in a same state of charge in the $(n-1)^{th}$ charge and discharge cycle, where $1 \leq y \leq n-1$.

In this embodiment, the charging system 10 further obtains the third battery impedance $R_3$ and the fourth battery impedance $R_4$. The charging system 10 may determine the impedance growth rate $K_2$ of the battery 13 based on the third battery impedance $R_3$ and the fourth battery impedance $R_4$.

Therefore, the charging system 10 may calculate the third cut-off voltage $V_3$ according to formula (13), and then may use the third cut-off voltage $V_3$ to end the constant-current charging phase of the battery 13 in the $m^{th}$ charge and discharge cycle.

To make the objectives, technical solutions, and technical effects of this application clearer, this application is further described below in detail with reference to the accompanying drawings and embodiments. A battery system used in each comparative example and example of this application is made through processes such as mixing, coating, assembling, chemical conversion, and aging of a cathode made of $LiCoO_2$, an anode made of graphite, a separator, an electrolyte solution, and a packaging shell. In a winding process of some battery cells, a reference electrode is added between a cathode plate and an anode plate to make a three-electrode battery, so as to test an electric potential difference between a cathode and an anode in a charging process through comparison. It should be noted that batteries of other chemical systems may alternatively be used in each comparative example and each example of this application, that is, other materials are used as cathode materials, for example, lithium manganate, lithium iron phosphate, and a ternary material. This is not limited in this application. A charging limit voltage 4.45V of the battery is used as an example in each comparative example and example of this application to show that the method in this application is applicable to batteries of various voltage systems, and is not limited to the 4.45V system. For the 4.45V system battery, the prior-art method in the comparative examples (constant-current and constant-voltage charging) and the method in this application in the examples are used to perform a cycle performance test, so as to compare their charging speeds and capacity decay degrees in charging processes.

The prior-art method was used to charge batteries in Comparative Examples 1 and 2 described below.

**Comparative Example 1**

It should be noted that Comparative Example 1 discloses a specific embodiment process of the prior-art method (that is, in a constant-current charging phase of each charge and discharge cycle, charge the battery with a same fixed current until a fixed voltage is reached) in which a fresh battery was used.

Ambient temperature: 25°C.

Charging process:

Step 1: The battery was charged with a constant current of 1.5C until the battery voltage reached the cut-off voltage of 4.45V (which may be understood as the charging limit voltage).

Step 2: Then the battery was charged with the constant voltage of 4.45V until the battery current reached the cut-off current of 0.05C.

Step 3: The battery was stood for 5 minutes.

Step 4: Then the battery was discharged with a constant current of 1.0C until the battery voltage was 3.0V.

Step 5: Then the battery was stood for 5 minutes again.

Step 6: The foregoing five steps were repeated for 500 cycles.

In the specific Examples 1 to 4 described below, fresh batteries were used to obtain corresponding charging parameters, and the method in the embodiments of the present invention was used to charge the fresh batteries. It should be noted that the ambient temperature in the charging process of Examples 1 to 4 was the same as that in Comparative Example 1 and remained unchanged. The fresh batteries were unused batteries just leaving factories, or batteries whose quantity of charge and discharge cycles after leaving factories was less than a preset quantity (for example, 10 times, or other times).

**Example 1**

(1) Parameter setting

$SOC_2$ and $SOC_3$ parameter obtaining process:

Ambient temperature: 25°C;

The fresh battery was selected to obtain the parameter $SOC_2$ (or $SOC_3$, $SOC_2=SOC_3$) in the following specific process:

Step 1: The battery was discharged with a constant current of 1.0C until the battery voltage was 3.0V.

Step 2: The battery was stood for 5 minutes.

Step 3: The battery was charged with a constant current of 1.5C until the battery voltage reached the cut-off voltage of 4.45V (which may be understood as the charging limit voltage).

Step 4: Then the battery was charged with the constant voltage of 4.45V until the battery current reached the cut-off current of 0.05C.

The SOC of the battery at the end of constant-current charging in the foregoing charging process was calculated as $SOC_2$, where $SOC_2$ was 70.6%.

$I_m$ of the battery in the cycle process changed according to the following patterns:

$$I_m=I_n+(k_1 \times m+k_2) \times I_n, \text{ where } n=1, I_n=1.5C, 1 \leq m \leq 80, k_1=0, k_2=0, 81 \leq m \leq 500,$$

$$k_1=0.0003, \text{ and } k_2=0.$$

(2) Charging process:

Ambient temperature: 25°C;

Charging process:

Step 1: The SOC of the battery when the charging voltage in the constant-current charging phase of the previous charge cycle was $U_{cl}$ (for example, 4.45V) was obtained as $SOC_1$, and the current actual capacity Q of the battery was obtained.

Step 2: The battery was charged with a constant current $I_m$ until the state of charge of the battery reached $SOC_1$ (that is, the capacity of the battery was $SOC_1 \times Q$), where $I_m$ changed with a quantity of cycles m according to a preset formula.

Step 3: The SOC when the charging voltage in the constant-current charging phase in step 2 was $U_{cl}$ was obtained

as $SOC_1$ for a charging process of the next cycle.

Step 4: The battery was charged with a constant current of 1.5 C until the state of charge of the battery reached $SOC_2$ (that is, 70.6%), and the total capacity of the battery was 70.6%×Q at this time.

Step 5: The cut-off voltage $V_2$ (that is, the second charging voltage) in the constant-current charging phase in step 4 was obtained.

Step 6: The battery was constant-voltage charged with the constant voltage $V_2$ until the total capacity of the battery was Q.

Step 7: The battery was stood for 5 minutes.

Step 8: Then the battery was discharged with a constant current of 1.0C until the battery voltage was 3.0V.

Step 9: The discharge capacity in step 8 was obtained to obtain the actual capacity Q of the battery for serving as the cut-off capacity of the next charge cycle.

Step 10: Steps 2 to 9 were repeated for 500 cycles.

**Example 2**

(1) Parameter setting

$SOC_2$ and $SOC_3$ parameter obtaining process:
This process was the same as the parameter obtaining process of $SOC_2$ (or $SOC_3$, $SOC_2 = SOC_3$) in Example 1, and $SOC_2$ of the battery at the end of constant-current charging was obtained, which was 70.6%.

$I_m$ of the battery in a cycle process was set to change according to the following patterns:
$I_m = I_n + (U_{m-1} - U_n)/R_a$, where n=1, $I_n$=1.5C, $R_a$ was anode impedance of the fresh battery, $R_a$=30 mohm, $U_{m-1}$ and $U_1$ were anode potentials of the battery at the end of constant-current charging phases of the (m-1)th and the first charge and discharge cycles, $U_1$=0.09V, and $U_{m-1}$ needed to be obtained in real time based on SOC of the battery that was constant-current charged until the battery voltage was $U_{cl}$ (for example, $U_{cl}$=4.45V) in the (m-1)th charge and discharge cycle, and a pre-stored anode potential-SOC correspondence.

(2) Charging process:

This charging process was the same as that in Example 1, except that the specified $I_m$, and the corresponding $SOC_1$ and Q that were obtained in the charging process in Example 2 were used.

**Example 3**

(1) Parameter setting

$I_m$, $V_1$, $V_2$, and $V_3$ of the battery in a cycle process changed according to the following patterns:

the change pattern of $I_m$ was the same as that in Example 1;
$V_1 = U_{cl} + b_1 \times m + b_2$, where $U_{cl}$=4.45V, 1≤m≤80, $b_1$=0, and $b_2$=0;
81≤m≤500, $b_1$=0.00004, and $b_2$=0;
$V_2 = U_{cl} + b_1 \times m + b_2$, where $U_{cl}$=4.45V, 1≤m≤80, $b_1$=0, and $b_2$=0;
81≤m≤500, $b_1$=0.0002, and $b_2$=0; and
$V_3 = U_{cl} + b_1 \times m + b_2$, where $U_{cl}$=4.45V, 1≤m≤80, $b_1$=0, and $b_2$=0;
81≤m≤500, $b_1$=0.0002, and $b_2$=0.

(2) Charging process:

Step 1: The current actual capacity Q of the battery was obtained.

Step 2: The battery was charged with the constant current $I_m$ until the battery voltage reached the cut-off voltage $V_1$, where $I_m$ and $V_1$ changed with the quantity of cycles m according to a preset formula.

Step 3: The battery was charged with a constant current of 1.5 C until the charging voltage of the battery was $V_2$, where $V_2$ changed with the quantity of cycles m according to a preset formula.

Step 4: Then the battery was charged with the constant voltage $V_2$ until the total capacity of the battery was Q.

Step 5: The battery was stood for 5 minutes.

Step 6: Then the battery was discharged with a constant current of 1.0C until the battery voltage was 3.0V.

Step 7: The discharge capacity in step 6 was obtained to obtain the actual capacity Q of the battery for serving as the cut-off capacity of the next charge cycle.

Step 8: Steps 2 to 7 were repeated for 500 cycles.

**Example 4**

(1) Parameter setting

$I_m$, $V_1$, $V_2$, and $V_3$ of the battery in a cycle process changed according to the following patterns:

the change pattern of $I_m$ was the same as that in Example 2;
$V_1 = U_{cl} + R \times (I_m - I_n)$, $U_{cl} = 4.45$ V, n=3, $I_n = 1.5C$, $I_m$ varied with the quantity of cycles, and R was the battery impedance of the battery at the end of constant-current charging in the cycle process.

$$V_2 = OCV_1 + (U_{cl} - OCV_1) \times K_1;$$

$$V_3 = OCV_2 + (U_{cl} - OCV_2) \times K_2;$$

and
$U_{cl} = 4.45V$, $OCV_i = 4.10V$, $OCV_2 = 4.10V$, $K_1$ and $K_2$ were impedance growth rates of the battery, it was necessary to collect actual battery impedance and calculate the growth rate at any time in the cycle process of the battery, $K_1 = R_2/R_1$, $R_2$ was battery impedance of the battery when SOC was 50% in the $(m-1)^{th}$ charging process, $R_1$ was battery impedance of the battery when SOC was 50% in the first charging process, $R_1 = 60$ mohm, $K_2 = R_4/R_3$, $R_3$ was battery impedance of the battery when SOC was 50% in the first charging process, $R_3 = 60$ mohm, and $R_4$ was battery impedance of the battery when SOC was 50% in the $(n-1)^{th}$ charging process.

(2) Charging process:

Step 1: The current actual capacity Q and the current impedance growth rate k of the battery were obtained.
Step 2: The battery was charged with the constant current $I_m$ until the battery voltage reached the cut-off voltage $V_1$, where $I_m$ and $V_1$ changed with the quantity of cycles m according to a preset formula.
Step 3: The battery was charged with a constant current of 1.5C until the charging voltage of the battery was $V_2$, where $V_2$ changed with the quantity of cycles m according to a preset formula.
Step 4: Then the battery was charged with the constant voltage $V_2$ until the total capacity of the battery was Q.
Step 5: The impedance growth rates of the battery in step 3 and step 4 were calculated, and the battery impedance R of the battery at the end of constant-current charging was obtained, to calculate $V_1$, $V_2$, and $V_3$ in the next charge cycle.
Step 6: The battery was stood for 5 minutes.
Step 7: Then the battery was discharged with a constant current of 1.0 C until the battery voltage was 3.0V.
Step 8: The discharge capacity in step 7 was obtained to obtain the actual capacity Q of the battery for serving as the cut-off capacity of the next charge cycle.
Step 9: Steps 2 to 8 were repeated for 500 cycles.

**Comparative Example 2**

It should be noted that Comparative Example 2 discloses a specific embodiment process of the prior-art method in which a battery cycled 100 times was used.
Ambient temperature: 25°C;
Charging process:
This charging process was the same as that in Comparative Example 1, except that a battery cycled 100 times was used to perform the charging process in Comparative Example 1.
It should be noted that Examples 5 and 7 to 9 disclose specific embodiment processes of using fresh batteries to obtain corresponding parameters, and Example 6 discloses a specific embodiment process of using a battery cycled 100 times to obtain corresponding parameters, and charging, according to the method in this application, the battery cycled 100 times, where the ambient temperature in the charging process was the same as that in Comparative Example 1 and remained unchanged.

**Example 5**

(1) Parameter setting

The parameter obtaining process was the same as that in Example 1, except that m was incremented from 101 to 500.

(2) Charging process:

The charging process was the same as that in Example 1, except that a battery cycled 100 times was used for charging, and m was incremented from 101 to 500.

**Example 6**

It should be noted that in Example 6, a battery cycled 100 times was used to obtain corresponding charging parameters.

(1) Parameter setting

$SOC_1$ parameter obtaining process:

The parameter obtaining process of $SOC_1$ was the same as that in Example 1, except that a battery cycled 100 times was used to obtain the parameter $SOC_2$ (or $SOC_3$, $SOC_2=SOC_3$), and SOC of the battery at the end of constant-current charging was obtained as 68.7%, that is, $SOC_2$ was 68.7%.

$I_m$ of the battery in a cycle process was set to change according to the following patterns:
$I_m=I_n+(U_{m-1}-U_n)/R_a$, where n=100, $I_n$=1.5C, $R_a$ was anode impedance of the battery in the 100th cycle, $R_a$=30 mohm, $U_{m-1}$ and $U_n$ were anode potentials of the battery at the end of constant-current charging phases of the (m-1)th and the 100th charge and discharge cycles, $U_n$=0.09V, and $U_{m-1}$ needed to be obtained in real time based on SOC of the battery that was constant-current charged until the battery voltage was $U_{cl}$ (for example, $U_{cl}$=4.45V) in the (m-1)th charge and discharge cycle, and a pre-stored anode potential-SOC correspondence.

(2) Charging process:

The charging process was the same as that in Example 1, except that a battery cycled 100 times was used for charging, and m was incremented from 101 to 500.

**Example 7**

(1) Parameter setting

The parameter obtaining process was the same as that in Example 2, except that m was incremented from 101 to 500.

(2) Charging process:

The charging process was the same as that in Example 2, except that a battery cycled 100 times was used for charging, and m was incremented from 101 to 500.

**Example 8**

(1) Parameter setting

The parameter obtaining process was the same as that in Example 3, except that m was incremented from 101 to 500.

(2) Charging process:

The charging process was the same as that in Example 3, except that a battery cycled 100 times was used for charging, and m was incremented from 101 to 500.

**Example 9**

(1) Parameter obtaining process

The parameter obtaining process was the same as that in Example 4, except that m was incremented from 101 to 500.

(2) Charging process:

The charging process was the same as that in Example 4, except that a battery cycled 100 times was used for charging, and m was incremented from 101 to 500.

During the experiment, parameters (for example, a voltage, a current, and time) of the batteries in all comparative examples and Examples 1 to 9 in different charging phases were recorded, and results were recorded in Table 1 below.

**Table 1 Constant-current charging phase ending conditions and charge time of each phase in all comparative examples and Examples 1 to 9**

| | Value of n | Value of m | First charging phase | | | Second charging phase | | | First phase charge time (min) | Second phase charge time (min) | | Total charge time (min) |
|---|---|---|---|---|---|---|---|---|---|---|---|---|
| | | | $I_m$/C | $V_1$/V | $SOC_1$/% | $I_n$/C | $V_2$/V | $SOC_2$/% | Constant-current phase | Constant-current phase | Constant-voltage phase | |
| | 1 | 2 | / | / | / | 1.5 | 4.45 | 70.6 | / | 27.7 | 53.6 | 81.3 |
| Comparative Example 1 | 1 | 100 | / | / | / | 1.5 | 4.45 | 68.7 | / | 26.2 | 57.3 | 83.5 |
| | 1 | 200 | / | / | / | 1.5 | 4.45 | 66.0 | / | 24.7 | 60.3 | 85.0 |

17

| Parameter | | Col 1 | Col 2 | Col 3 | Col 4 | Col 5 | Col 6 | Col 7 | Col 8 |
|---|---|---|---|---|---|---|---|---|---|
| Value of n | | 1 | 1 | 1 | 1 | 1 | 1 | 1 | 1 |
| Value of m | | 500 | 2 | 100 | 200 | 500 | 2 | 100 | 200 |
| First charging phase | $I_m$/C | / | / | 1.545 | 1.59 | 1.725 | / | 1.54 | 1.60 |
| | $V_1$/V | / | / | 4.453 | 4.459 | 4.468 | / | 4.452 | 4.46 |
| | $SOC_1$/% | / | / | 68.7 | 66.0 | 62.9 | / | 68.7 | 66.2 |
| Second charging phase | $I_m$/C | 1.5 | 1.5 | 1.5 | 1.5 | 1.5 | 1.5 | 1.5 | 1.5 |
| | $V_2$/V | 4.45 | 4.45 | 4.46 | 4.49 | 4.53 | 4.45 | 4.46 | 4.49 |
| | $SOC_2$/% | 62.9 | 70.6 | 70.6 | 70.6 | 70.6 | 70.6 | 70.6 | 70.6 |
| First phase charge time (min) | Constant-current phase | / | / | 25.4 | 23.3 | 18.9 | / | 25.6 | 23.2 |
| Second phase charge time (min) | Constant-current phase | 22.5 | 27.7 | 0.7 | 1.0 | 3.1 | 27.7 | 0.7 | 1.0 |
| | Constant-voltage phase | 64.2 | 53.6 | 37.2 | 29.9 | 23.7 | 53.6 | 37.2 | 29.9 |
| Total charge time (min) | | 86.7 | 81.3 | 63.3 | 54.2 | 45.7 | 81.3 | 63.5 | 54.1 |

Columns 3–5: Example 1. Columns 6–8: Example 2.

18

| | Value of n | Value of m | First charging phase | | | Second charging phase | | | First phase charge time (min) | Second phase charge time (min) | | Total charge time (min) |
|---|---|---|---|---|---|---|---|---|---|---|---|---|
| | | | $I_m/C$ | $V_1/V$ | $SOC_1/\%$ | $I_n/C$ | $V_2/V$ | $SOC_2/\%$ | Constant-current phase | Constant-current phase | Constant-voltage phase | |
| | 1 | 500 | 1.74 | 4.471 | 62.9 | 1.5 | 4.53 | 70.6 | 18.7 | 3.1 | 23.7 | 45.5 |
| | 1 | 2 | / | / | / | 1.5 | 4.45 | 70.6 | / | 27.7 | 53.6 | 81.3 |
| | 1 | 100 | 1.545 | 4.454 | 69.0 | 1.5 | 4.47 | 71 | 25.5 | 0.7 | 35.7 | 61.9 |
| Example 3 | 1 | 200 | 1.59 | 4.458 | 65.8 | 1.5 | 4.49 | 70.6 | 23.2 | 1.0 | 29.9 | 54.1 |
| | 1 | 500 | 1.725 | 4.47 | 62.9 | 1.5 | 4.55 | 71.2 | 19.0 | 3.1 | 22.3 | 44.4 |
| | 3 | 4 | / | / | / | 1.5 | 4.45 | 70.6 | / | 27.7 | 53.6 | 81.3 |
| | 3 | 100 | 1.54 | 4.452 | 68.7 | 1.5 | 4.46 | 70.5 | 25.6 | 0.7 | 37.9 | 64.2 |
| Example 4 | 3 | 200 | 1.60 | 4.46 | 66.2 | 1.5 | 4.49 | 70.8 | 23.2 | 1.0 | 29.1 | 53.3 |

| | | | Comparative Example 2 | | | | Example 5 | | |
|---|---|---|---|---|---|---|---|---|---|
| Value of n | | 3 | 100 | 100 | 100 | 100 | 100 | 100 | 100 |
| Value of m | | 500 | 102 | 200 | 300 | 500 | 102 | 200 | 300 |
| First charging phase | $I_m$/C | 1.74 | / | / | / | / | 1.545 | 1.59 | 1.635 |
| | $V_1$/V | 4.471 | / | / | / | / | 4.453 | 4.459 | 4.463 |
| | $SOC_1$/% | 62.9 | / | / | / | / | 68.7 | 66.0 | 64.5 |
| Second charging phase | $I_m$/C | 1.5 | 1.5 | 1.5 | 1.5 | 1.5 | 1.5 | 1.5 | 1.5 |
| | $V_2$/V | 4.53 | 4.45 | 4.45 | 4.45 | 4.45 | 4.46 | 4.49 | 4.50 |
| | $SOC_2$/% | 70.3 | 68.7 | 66.0 | 64.5 | 62.9 | 70.6 | 70.6 | 70.6 |
| First phase charge time (min) | Constant-current phase | 18.7 | / | / | / | / | 25.4 | 23.3 | 21.2 |
| Second phase charge time (min) | Constant-current phase | 3.1 | 26.2 | 24.7 | 23.2 | 22.5 | 0.7 | 1.0 | 2.0 |
| | Constant-voltage phase | 24.9 | 57.3 | 60.3 | 62.4 | 64.2 | 37.2 | 29.9 | 27.6 |
| Total charge time (min) | | 46.7 | 83.5 | 85.0 | 85.6 | 86.7 | 63.3 | 54.2 | 50.8 |

| | | | | | | | | | |
|---|---|---|---|---|---|---|---|---|---|
| Total charge time (min) | | 45.8 | 83.4 | 62.7 | 57.6 | 50.8 | 63.5 | 54.1 | 50.6 |
| Second phase charge time (min) | Constant-voltage phase | 23.7 | 57.3 | 38.4 | 34.4 | 28.8 | 37.2 | 29.9 | 27.6 |
| | Constant-current phase | 3.2 | 0.7 | 1.0 | 2.0 | 3.1 | 0.7 | 1.0 | 2.0 |
| First phase charge time (min) | Constant-current phase | 18.9 | 25.4 | 23.3 | 21.2 | 18.9 | 25.6 | 23.2 | 21.0 |
| Second charging phase | $SOC_2$/% | 70.6 | 68.7 | 68.7% | 68.7 | 68.7 | 70.6 | 70.6 | 70.6 |
| | $V_2$/V | 4.53 | 4.45 | 4.46 | 4.48 | 4.51 | 4.46 | 4.49 | 4.50 |
| | $I_n$/C | 1.5 | 1.5 | 1.5 | 1.5 | 1.5 | 1.5 | 1.5 | 1.5 |
| First charging phase | $SOC_1$/% | 62.9 | 68.7 | 66.0 | 64.5 | 62.9 | 68.7 | 66.2 | 64.5 |
| | $V_1$/V | 4.468 | 4.453 | 4.459 | 4.463 | 4.468 | 4.452 | 4.46 | 4.464 |
| | $I_m$/C | 1.725 | 1.545 | 1.59 | 1.635 | 1.725 | 1.54 | 1.60 | 1.64 |
| Value of m | | 500 | 102 | 200 | 300 | 500 | 102 | 200 | 300 |
| Value of n | | 100 | 100 | 100 | 100 | 100 | 100 | 100 | 100 |
| | | | | | Example 6 | | | | Example 7 |

| | Value of n | Value of m | First charging phase | | | Second charging phase | | | First phase charge time (min) | Second phase charge time (min) | | Total charge time (min) |
|---|---|---|---|---|---|---|---|---|---|---|---|---|
| | | | $I_m$/C | $V_1$/V | $SOC_1$/% | $I_n$/C | $V_2$/V | $SOC_2$/% | Constant-current phase | Constant-current phase | Constant-voltage phase | |
| | 100 | 500 | 1.74 | 4.471 | 62.9 | 1.5 | 4.53 | 70.6 | 18.7 | 3.1 | 23.7 | 45.5 |
| Example 8 | 100 | 102 | 1.545 | 4.454 | 69.0 | 1.5 | 4.47 | 71 | 25.5 | 0.7 | 35.7 | 61.9 |
| | 100 | 200 | 1.59 | 4.458 | 65.8 | 1.5 | 4.49 | 70.6 | 23.2 | 1.0 | 29.9 | 54.1 |
| | 100 | 300 | 1.635 | 4.462 | 64.4 | 1.5 | 4.51 | 70.8 | 21.1 | 2.0 | 27.1 | 50.2 |
| | 100 | 500 | 1.725 | 4.47 | 62.9 | 1.5 | 4.55 | 71.2 | 19.0 | 3.1 | 22.3 | 44.4 |
| Example 9 | 100 | 102 | 1.54 | 4.452 | 68.7 | 1.5 | 4.46 | 70.5 | 25.6 | 0.7 | 37.9 | 64.2 |
| | 100 | 200 | 1.60 | 4.46 | 66.2 | 1.5 | 4.49 | 70.8 | 23.2 | 1.0 | 29.1 | 53.3 |
| | 100 | 300 | 1.64 | 4.464 | 64.5 | 1.5 | 4.51 | 70.8 | 21.0 | 2.0 | 27.1 | 50.1 |
| | 100 | 500 | 1.74 | 4.471 | 62.9 | 1.5 | 4.53 | 70.3 | 18.7 | 3.1 | 24.9 | 46.7 |

The main difference between the specific Examples 10 to 19 described below and Examples 1 to 9 lies in that a constant-voltage charging step was added in the $m^{th}$ charge and discharge cycle, that is, the battery was constant-voltage charged with the first cut-off voltage $V_1$ to the second charging current $I_n$. Specifically, in Examples 10 to 13, fresh batteries were used to obtain corresponding charging parameters, and the method in the embodiments of the present invention was used to charge the fresh batteries.

**Example 10**

(1) Parameter setting

The parameter obtaining process was the same as that in Example 1.

(2) Charging process:

The charging process was the same as that in Example 1, except that in Example 10, the constant-voltage charging phase was added between step 3 and step 4 of Example 1, that is, the battery was charged with the constant voltage $V_1$ until the battery current was 1.5C (that is, the second charging current $I_n$).

**Example 11**

(1) Parameter setting

The parameter obtaining process was the same as that in Example 2.

(2) Charging process:

This charging process was the same as that in Example 10, except that the specified $I_m$, and the corresponding $SOC_1$ and Q that were obtained in the charging process in Example 11 were used.

**Example 12**

(1) Parameter setting

The parameter obtaining process was the same as that in Example 3.

(2) Charging process:

The charging process was the same as that in Example 3, except that in Example 12, the constant-voltage charging phase was added between step 2 and step 3 of Example 3, that is, the battery was charged with the constant voltage $V_1$ until the battery current was 1.5C (that is, the second charging current $I_n$).

**Example 13**

(1) Parameter setting

The parameter obtaining process was the same as that in Example 4.

(2) Charging process:

The charging process was the same as that in Example 4, except that in Example 13, the constant-voltage charging phase was added between step 2 and step 3 of Example 4, that is, the battery was charged with the constant voltage $V_1$ until the battery current was 1.5C (that is, the second charging current $I_n$).
In the specific Examples 14 to 18 described below, batteries cycled 100 times were used to obtain corresponding charging parameters, and the method in the embodiments of the present invention was used to charge the batteries cycled 100 times.
It should be noted that Examples 14 and 16 to 18 disclose specific embodiment processes of using fresh batteries to obtain corresponding parameters, and Example 15 discloses a specific embodiment process of using a battery cycled 100 times to obtain corresponding parameters, and charging, according to the method in this application, the battery cycled 100 times, where the ambient temperature in the charging process was the same as that in Comparative Example 1 and remained unchanged.

**Example 14**

(1) Parameter setting

The parameter obtaining process was the same as that in Example 1, except that m was incremented from 101 to 500.

(2) Charging process:

The charging process was the same as that in Example 10, except that a battery cycled 100 times was used for charging, and m was incremented from 101 to 500.

**Example 15**

It should be noted that in Example 15, a battery cycled 100 times was used to obtain corresponding charging parameters.

(1) Parameter setting

The parameter obtaining process was the same as that in Example 6, except that m was incremented from 101 to 500.

(2) Charging process:

The charging process was the same as that in Example 10, except that a battery cycled 100 times was used for charging, and m was incremented from 101 to 500.

**Example 16**

(1) Parameter setting

The parameter obtaining process was the same as that in Example 2, except that m was incremented from 101 to 500.

(2) Charging process:

The charging process was the same as that in Example 10, except that a battery cycled 100 times was used for charging, and m was incremented from 101 to 500.

**Example 17**

(1) Parameter setting

The parameter obtaining process was the same as that in Example 3, except that m was incremented from 101 to 500.

(2) Charging process:

The charging process was the same as that in Example 3, except that a battery cycled 100 times was used for charging, and m was incremented from 101 to 500.

**Example 18**

(1) Parameter setting

The parameter obtaining process was the same as that in Example 4, except that m was incremented from 101 to 500.

(2) Charging process:

The charging process was the same as that in Example 4, except that a battery cycled 100 times was used for charging, and m was incremented from 101 to 500.

During the experiment, parameters (for example, a voltage, a current, and time) of the batteries in all comparative examples and Examples 10 to 18 in different charging phases were recorded, and results were recorded in Table 2 below.

**Table 2 Constant-current charging phase ending conditions and charge time of each phase in all comparative examples and Examples 10 to 18**

| | Value of n | Value of m | First charging phase | | | Second charging phase | | | First phase charge time (min) | | Second phase charge time (min) | | Total charge time (min) |
|---|---|---|---|---|---|---|---|---|---|---|---|---|---|
| | | | $I_m/C$ | $V_1/V$ | $SOC_1/\%$ | $I_n/C$ | $V_2/V$ | $SOC_2/\%$ | Constant-current phase | Constant-voltage phase | Constant-current phase | Constant-voltage phase | |
| | 1 | 2 | / | / | / | 1.5 | 4.45 | 70.6 | / | / | 27.7 | 53.6 | 81.3 |
| Comparative Example 1 | 1 | 100 | / | / | / | 1.5 | 4.45 | 68.7 | / | / | 26.2 | 57.3 | 83.5 |
| | 1 | 200 | / | / | / | 1.5 | 4.45 | 66.0 | / | / | 24.7 | 60.3 | 85.0 |

| | | | | | | | | | |
|---|---|---|---|---|---|---|---|---|---|
| Total charge time (min) | | 86.7 | 81.3 | 63.3 | 54.2 | 45.6 | 81.3 | 63.5 | 54.1 |
| Second phase charge time (min) | Constant-voltage phase | 64.2 | 53.6 | 37.2 | 29.9 | 23.7 | 53.6 | 37.2 | 29.9 |
| | Constant-current phase | 22.5 | 27.7 | 0.4 | 0.6 | 1.6 | 27.7 | 0.4 | 0.6 |
| First phase charge time (min) | Constant-voltage phase | / | / | 0.3 | 0.4 | 1.4 | / | 0.3 | 0.4 |
| | Constant-current phase | / | / | 25.4 | 23.3 | 18.9 | / | 25.6 | 23.2 |
| Second charging phase | $SOC_2$/% | 62.9 | 70.6 | 70.6 | 70.6 | 70.6 | 70.6 | 70.6 | 70.6 |
| | $V_2$/V | 4.45 | 4.45 | 4.46 | 4.49 | 4.53 | 4.45 | 4.46 | 4.49 |
| | $I_n$/C | 1.5 | 1.5 | 1.5 | 1.5 | 1.5 | 1.5 | 1.5 | 1.5 |
| First charging phase | $SOC_1$/% | / | / | 68.7 | 66.0 | 62.9 | / | 68.7 | 66.2 |
| | $V_1$/V | / | / | 4.453 | 4.459 | 4.468 | / | 4.452 | 4.46 |
| | $I_m$/C | / | / | 1.545 | 1.59 | 1.725 | / | 1.54 | 1.60 |
| Value of m | | 500 | 2 | 100 | 200 | 500 | 2 | 100 | 200 |
| Value of n | | 1 | 1 | 1 | 1 | 1 | 1 | 1 | 1 |
| | | | | Example 10 | | | | Example 11 | |

27

| | Value of n | Value of m | First charging phase $I_m/C$ | First charging phase $V_1/V$ | First charging phase $SOC_1/\%$ | Second charging phase $I_r/C$ | Second charging phase $V_r/V$ | Second charging phase $SOC_r/\%$ | First phase charge time (min) Constant-current phase | First phase charge time (min) Constant-voltage phase | Second phase charge time (min) Constant-current phase | Second phase charge time (min) Constant-voltage phase | Total charge time (min) |
|---|---|---|---|---|---|---|---|---|---|---|---|---|---|
| Example 12 | 1 | 500 | 1.74 | 4.471 | 62.9 | 1.5 | 4.53 | 70.6 | 18.7 | 1.4 | 1.6 | 23.7 | 45.4 |
| | 1 | 2 | / | / | / | 1.5 | 4.45 | 70.6 | / | / | 27.7 | 53.6 | 81.3 |
| | 1 | 100 | 1.545 | 4.454 | 69.0 | 1.5 | 4.47 | 71 | 25.5 | 0.3 | 0.4 | 35.7 | 61.9 |
| | 1 | 200 | 1.59 | 4.458 | 65.8 | 1.5 | 4.49 | 70.6 | 23.2 | 0.4 | 0.6 | 29.9 | 54.1 |
| | 1 | 500 | 1.725 | 4.47 | 62.9 | 1.5 | 4.55 | 71.2 | 19.0 | 1.4 | 1.6 | 22.3 | 44.3 |
| Example 13 | 3 | 4 | / | / | / | 1.5 | 4.45 | 70.6 | / | / | 27.7 | 53.6 | 81.3 |
| | 3 | 100 | 1.54 | 4.452 | 68.7 | 1.5 | 4.46 | 70.5 | 25.6 | 0.3 | 0.4 | 37.9 | 64.2 |
| | 3 | 200 | 1.60 | 4.46 | 66.2 | 1.5 | 4.49 | 70.8 | 23.2 | 0.4 | 0.6 | 29.1 | 53.3 |

| | Value of n | Value of m | First charging phase | | | Second charging phase | | | First phase charge time (min) | | Second phase charge time (min) | | Total charge time (min) |
|---|---|---|---|---|---|---|---|---|---|---|---|---|---|
| | | | $I_m/C$ | $V_1/V$ | $SOC_1/\%$ | $I_n/C$ | $V_2/V$ | $SOC_2/\%$ | Constant-current phase | Constant-voltage phase | Constant-current phase | Constant-voltage phase | |
| | 3 | 500 | 1.74 | 4.471 | 62.9 | 1.5 | 4.53 | 70.3 | 18.7 | 1.4 | 1.6 | 24.9 | 46.6 |
| Comparative Example 2 | 100 | 102 | / | / | / | 1.5 | 4.45 | 68.7 | / | / | 26.2 | 57.3 | 83.5 |
| | 100 | 200 | / | / | / | 1.5 | 4.45 | 66.0 | / | / | 24.7 | 60.3 | 85.0 |
| | 100 | 300 | / | / | / | 1.5 | 4.45 | 64.5 | / | / | 23.2 | 62.4 | 85.6 |
| | 100 | 500 | / | / | / | 1.5 | 4.45 | 62.9 | / | / | 22.5 | 64.2 | 86.7 |
| Example 14 | 100 | 102 | 1.545 | 4.453 | 68.7 | 1.5 | 4.46 | 70.6 | 25.4 | 0.3 | 0.4 | 37.2 | 63.3 |
| | 100 | 200 | 1.59 | 4.459 | 66.0 | 1.5 | 4.49 | 70.6 | 23.3 | 0.4 | 0.6 | 29.9 | 54.2 |
| | 100 | 300 | 1.635 | 4.463 | 64.5 | 1.5 | 4.50 | 70.6 | 21.2 | 0.8 | 1.2 | 27.6 | 50.8 |

| | Example 15 | | | | | Example 16 | | |
|---|---|---|---|---|---|---|---|---|
| Value of n | 100 | 100 | 100 | 100 | 100 | 100 | 100 | 100 |
| Value of m | 500 | 102 | 200 | 300 | 500 | 102 | 200 | 300 |
| First charging phase $I_m/C$ | 1.725 | 1.545 | 1.59 | 1.635 | 1.725 | 1.54 | 1.60 | 1.64 |
| First charging phase $V_1/V$ | 4.468 | 4.453 | 4.459 | 4.463 | 4.468 | 4.452 | 4.46 | 4.464 |
| First charging phase $SOC_1/\%$ | 62.9 | 68.7 | 66.0 | 64.5 | 62.9 | 68.7 | 66.2 | 64.5 |
| Second charging phase $I_r/C$ | 1.5 | 1.5 | 1.5 | 1.5 | 1.5 | 1.5 | 1.5 | 1.5 |
| Second charging phase $V_r/V$ | 4.53 | 4.45 | 4.46 | 4.48 | 4.51 | 4.46 | 4.49 | 4.50 |
| Second charging phase $SOC_r/\%$ | 70.6 | 68.7 | 68.7% | 68.7 | 68.7 | 70.6 | 70.6 | 70.6 |
| First phase charge time (min) Constant-current phase | 18.9 | 25.4 | 23.3 | 21.2 | 18.9 | 25.6 | 23.2 | 21.0 |
| First phase charge time (min) Constant-voltage phase | 1.4 | 0.3 | 0.4 | 0.8 | 1.4 | 0.3 | 0.4 | 0.8 |
| Second phase charge time (min) Constant-current phase | 1.6 | 0.4 | 0.6 | 1.2 | 1.6 | 0.4 | 0.6 | 1.2 |
| Second phase charge time (min) Constant-voltage phase | 23.7 | 57.3 | 38.4 | 34.4 | 28.8 | 37.2 | 29.9 | 27.6 |
| Total charge time (min) | 45.6 | 83.4 | 62.7 | 57.6 | 50.7 | 63.5 | 54.1 | 50.6 |

| | | | | | | | | | |
|---|---|---|---|---|---|---|---|---|---|
| | | Example 17 | | | | | Example 18 | | |
| Value of n | | 100 | 100 | 100 | 100 | 100 | 100 | 100 | 100 |
| Value of m | | 500 | 102 | 200 | 300 | 500 | 102 | 200 | 300 |
| First charging phase | $I_m$/C | 1.74 | 1.545 | 1.59 | 1.635 | 1.725 | 1.54 | 1.60 | 1.64 |
| | $V_1$/V | 4.471 | 4.454 | 4.458 | 4.462 | 4.47 | 4.452 | 4.46 | 4.464 |
| | $SOC_1$/% | 62.9 | 69.0 | 65.8 | 64.4 | 62.9 | 68.7 | 66.2 | 64.5 |
| Second charging phase | $I_r$/C | 1.5 | 1.5 | 1.5 | 1.5 | 1.5 | 1.5 | 1.5 | 1.5 |
| | $V_r$/V | 4.53 | 4.47 | 4.49 | 4.51 | 4.55 | 4.46 | 4.49 | 4.51 |
| | $SOC_r$/% | 70.6 | 71 | 70.6 | 70.8 | 71.2 | 70.5 | 70.8 | 70.8 |
| First phase charge time (min) | Constant-current phase | 18.7 | 25.5 | 23.2 | 21.1 | 19.0 | 25.6 | 23.2 | 21.0 |
| | Constant-voltage phase | 1.4 | 0.3 | 0.4 | 0.8 | 1.4 | 0.3 | 0.4 | 0.8 |
| Second phase charge time (min) | Constant-current phase | 1.6 | 0.4 | 0.6 | 1.2 | 1.6 | 0.4 | 0.6 | 1.2 |
| | Constant-voltage phase | 23.7 | 35.7 | 29.9 | 27.1 | 22.3 | 37.9 | 29.1 | 27.1 |
| Total charge time (min) | | 45.4 | 61.9 | 54.1 | 50.2 | 44.3 | 64.2 | 53.3 | 50.1 |

31

| | | |
|---|---|---|
| Total charge time (min) | | 46.6 |
| Second phase charge time (min) | Constant-voltage phase | 24.9 |
| | Constant-current phase | 1.6 |
| First phase charge time (min) | Constant-voltage phase | 1.4 |
| | Constant-current phase | 18.7 |
| Second charging phase | $SOC_2$/% | 70.3 |
| | $V_2$/V | 4.53 |
| | $I_n$/C | 1.5 |
| First charging phase | $SOC_1$/% | 62.9 |
| | $V_1$/V | 4.471 |
| | $I_m$/C | 1.74 |
| Value of m | | 500 |
| Value of n | | 100 |
| | | |

From the experimental data in Table 1, it can be learned that in the method used in Examples 1 to 18, the constant-charging current in the first phase was increased, the constant-current charge time in the first phase was shortened, the constant-current charge time in the second phase was prolonged, and the constant-voltage charge time in the second phase was shortened, so that charge time of the battery was shortened and the charge rate of the battery was increased.

In the method of Comparative Examples 1 and 2, as the battery impedance was gradually increased, the charge time of the battery in the constant-current charging phase was shortened, and the charge time in the constant-voltage phase was prolonged. Consequently, the total charge time was prolonged. Compared with Comparative Examples 1 and 2, in the method used in specific Examples 1 to 18: the charging current in the constant-current charging phase was increased to further shorten the charging time in the constant-current phase. In addition, the charge time in the constant-voltage phase can be greatly shortened, so that the full charge time of the battery can be greatly shortened. Therefore, the charging speed was significantly faster than the charging speed in the comparative examples.

Compared with Examples 1 to 9, in Examples 10 to 18, the total charge time changed more obviously when the quantity of charge and discharge cycles reached a specific value.

Therefore, when the method in Examples 1 to 18 is used to charge a battery, the constant-current charge time in the first phase can be shortened, the constant-voltage charge time in the second phase is greatly reduced, and the battery full charge time is shortened. In addition, the actual battery capacity is used to control ending of charging, thereby ensuring that overcharge does not occur on the battery and the battery life is not affected.

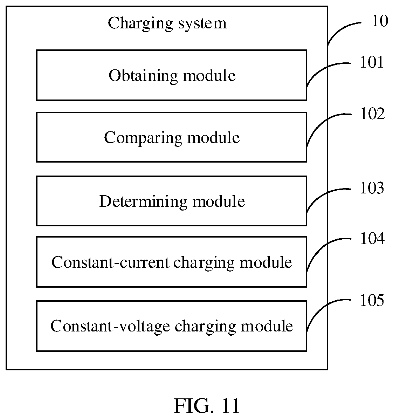

Referring to FIG. 11, in this embodiment, the charging system 10 may be divided into one or more modules. The one or more modules are stored in the processor 11 and executed by the processor 11 to complete this application. The one or more modules may be a series of computer program instruction segments capable of completing specific functions, and the instruction segments are used to describe an execution process of the charging system 10 in the electronic apparatus 100. For example, the charging system 10 may be divided into an obtaining module 101, a comparing module 102, a determining module 103, a constant-current charging module 104, and a constant-voltage charging module 105 in FIG. 10.

The obtaining module 101 is configured to obtain first states of charge and first charging currents of the battery at charge rates corresponding to different temperatures at the end of a constant-current charging phase of the $n^{th}$ charge and discharge cycle.

The obtaining module 101 is configured to obtain an anode non-polarization charging curve and anode impedance $R_a$ of the battery in the $n^{th}$ charge and discharge cycle, and the first state of charge and a second charging current $I_n$ of the battery at the end of the constant-current charging phase, and obtain, based on the anode non-polarization charging curve and the first state of charge, a first anode potential $U_n$ of the battery that is constant-current charged to a charging limit voltage $U_{cl}$ in the $n^{th}$ charge and discharge cycle.

The obtaining module 101 is further configured to obtain a charge curve of the battery in the $(m-1)^{th}$ charge and discharge cycle and a second state of charge of the battery at the end of a constant-current charging phase, and obtain, based on the anode non-polarization charging curve and the second state of charge of the battery, a second anode potential $U_{m-1}$ of the battery that is constant-current charged to the charging limit voltage $U_{cl}$ in the $(m-1)^{th}$ charge and discharge cycle.

The obtaining module 101 is further configured to obtain a third anode potential $U_{m-2}$ of the battery that is constant-current charged to the charging limit voltage $U_{cl}$ in the $(m-2)^{th}$ charge and discharge cycle.

The obtaining module 101 is further configured to obtain a third charging current $I_{m-1}$ of the battery in the constant-current charging phase of the $(m-1)^{th}$ charge and discharge cycle. The determining module 102 is configured to determine a first charging current $I_m$ of the battery in the $m^{th}$ charge and discharge cycle based on the first anode potential $U_n$, the second anode potential $U_{m-1}$, the anode impedance $R_a$, and the second charging current $I_n$.

The determining module 102 is further configured to determine the first charging current $I_m$ of the battery in the $m^{th}$ charge and discharge cycle based on the second anode potential $U_{m-1}$, the third anode potential $U_{m-2}$, the anode impedance $R_a$, and the third charging current $I_{m-1}$.

The control module 103 is configured to charge the battery with the first charging current $I_m$ in the $m^{th}$ charge and discharge cycle.

The constant-current charging module 104 is configured to constant-current charge the battery 13 until a voltage of the battery 13 reaches a cut-off voltage or a cut-off capacity. The constant-voltage charging module 105 is further configured to constant-voltage charge the battery 13 until a current of the battery 13 reaches a cut-off current or a cut-off capacity.

Charging of the battery 13 may be managed by using the charging system 10 to increase charging efficiency, service life, and reliability of the battery. For specific content, refer to the embodiments of the foregoing method of charging a battery. Details are not described herein again.

In an embodiment, the processor 11 may be a central processing unit (CPU), or may be a general-purpose processor, a digital signal processor (DSP), an application specific integrated circuit (ASIC), a field-programmable gate array (FPGA) or another programmable logic device, a discrete gate or transistor logic device, a discrete hardware component, or the like. The general-purpose processor may be a microprocessor, or the processor 12 may be any conventional processor or the like.

When the modules in the charging system 10 are implemented in a form of a software functional unit and sold or used as an independent product, the modules may be stored in a computer-readable storage medium. Based on such an understanding, all or some of the processes of the methods in the embodiments implemented by this application may also be implemented by a computer program instructing relevant hardware. The computer program may be stored in a computer-readable storage medium. When the computer program is executed by the processor, the steps of the foregoing method embodiments can be implemented. The computer program includes computer program code. The computer program code may be in a source code form, an object code form, or an executable file form, some intermediate forms, or the like. The computer-readable medium may include any entity or apparatus, a recording medium, a USB flash drive, a removable hard disk, a magnetic disk, an optical disk, a computer memory, a read-only memory (ROM), a random access memory (RAM), an electrical carrier signal, a telecommunications signal, a software distribution medium, and the like capable of carrying the computer program code. It should be noted that content contained in the computer-readable medium may be appropriately added or removed according to requirements of legislations and patent practices in jurisdictions. For example, according to legislations and patent practices in some jurisdictions, the computer-readable medium does not include electrical carrier signals and telecommunications signals.

It can be understood that the foregoing module division is logical function division, and may be other division during actual embodiment. In addition, function modules in the embodiments of this application may be integrated into a same processing unit, or each of the modules may exist alone physically, or two or more modules are integrated into a same unit. The integrated module may be implemented in a form of hardware, or may be implemented in a form of a combination of hardware and a software functional module.

In another embodiment, the electronic apparatus 100 may also include a memory (not shown in the figure), and the one or more modules may also be stored in the memory and executed by the processor. The memory may be an internal memory of the electronic apparatus 100, that is, a memory built in the electronic apparatus 100. In other embodiments, the memory may alternatively be an external memory of the electronic apparatus 100, that is, a memory externally connected to the electronic apparatus 100.

In some embodiments, the memory is configured to store program code and various data, for example, program code of the charging system 10 installed in the electronic apparatus 100, and implement high-speed and automatic access of the program or data during operation of the electronic apparatus 100.

The memory may include a random access memory, or may include a non-volatile memory, for example, a hard disk, a memory, a plug-in hard disk drive, a smart media card (SMC), a secure digital (SD) card, a flash card, at least one magnetic disk storage device, a flash memory device, or other volatile solid-state storage devices.

**Claims**

1. A method of charging a battery, **characterized in that**, the method comprising:

   in an $m^{th}$ charge and discharge cycle, constant-current charging the battery with a first charging current $I_m$ until a first state of charge $SOC_1$ of the battery is reached, wherein the battery has a corresponding first cut-off voltage $V_1$; constant-current charging the battery with a second charging current $I_n$ until a second state of charge $SOC_2$ of the battery is reached, wherein the battery has a second cut-off voltage $V_2$ at the end of constant-current charging, and constant-voltage charging the battery with the second cut-off voltage $V_2$ to a fully charged state;
   wherein $I_m = I_n + k \times I_n$, $0 < k \leq 1$, n is an integer greater than or equal to 0, m is an integer that is greater than or equal to 2 and that is greater than n by at least two, and k has different values in at least two charge and discharge cycles;
   $I_n$ is a charging current of the battery or of another battery, which has the same model of the battery in charge, in a constant-current charging phase of an $n^{th}$ charge and discharge cycle, or a preset value, and in the constant-current charging phase of the $n^{th}$ charge and discharge cycle, the battery is constant-current charged only with the second charging current $I_n$ to a charging limit voltage $U_{cl}$, or the battery is constant-current charged only with the second charging current $I_n$ to a third state of charge $SOC_3$, and has a third cut-off voltage $V_3$ corresponding to the third state of charge $SOC_3$; and
   $SOC_1$ is a state of charge of the battery or of another battery, which has the same model of the battery in charge, that is constant-current charged to the charging limit voltage $U_{cl}$ in an $(m-1)^{th}$ charge and discharge cycle, wherein $SOC_1 \leq SOC_3 + S$, $SOC_3 - S \leq SOC_2 \leq SOC_3 + S \leq 100\%$, and $0 \leq S \leq 10\%$.

2. The method according to claim 1, **characterized in that** $SOC_3$ is a state of charge of another battery, which has the same model of the battery in charge, at the end of the constant-current charging phase of the $n^{th}$ charge and discharge cycle, or a preset value.

3. The method according to claim 1 or 2, **characterized in that** k satisfies the following formula: $k=k_1 \times m+k_2$, wherein $0 \leq k_1 \leq 0.001$, and $0 \leq k_2 \leq 0.2$.

4. The method according to any one of claims 1 to 3, **characterized in that** the first charging current $I_m$ satisfies the following formula:

$I_m=I_n+(U_{m-1}-U_n)/R_a$, wherein m> 1; or $I_m=I_{m-1}+(U_{m-1}-U_{m-2})/R_a$, wherein m>2,
wherein $U_n$ is a first anode potential of the battery or another battery identical to the battery that is constant-current charged to the charging limit voltage $U_{cl}$ in the $n^{th}$ charge and discharge cycle, $U_{m-1}$ is a second anode potential of the battery or another battery identical to the battery that is constant-current charged to the charging limit voltage $U_{cl}$ in the $(m-1)^{th}$ charge and discharge cycle, $R_a$ is anode impedance of the battery or another battery identical to the battery in the $n^{th}$ charge and discharge cycle, $I_{m-1}$ is a charging current of the battery or another battery identical to the battery in a constant-current charging phase of the $(m-1)^{th}$ charge and discharge cycle, or a preset value, and $U_{m-2}$ is a third anode potential of the battery or another battery identical to the battery that is constant-current charged to the charging limit voltage $U_{cl}$ in the $(m-2)^{th}$ charge and discharge cycle.

5. The method according to any one of claims 1 to 4, **characterized in that** when the battery is constant-current charged with the first charging current $I_m$ to the first state of charge $SOC_1$, a battery capacity is $Q_m$, wherein $Q_m=SOC_1 \times Q$, and Q is a current actual capacity of the battery.

6. The method according to any one of claims 1 to 5, **characterized in that** the method further comprises, after constant-current charging the battery with the first charging current $I_m$ to the first state of charge $SOC_1$: constant-voltage charging the battery with the first cut-off voltage $V_1$ to the second charging current $I_n$.

7. The method according to any one of claims 1 to 6, **characterized in that** the method further comprises steps of:

comparing a magnitude of the third cut-off voltage $V_3$ with that of the charging limit voltage $U_{cl}$; and
determining a charging mode of the battery before the $m^{th}$ charge and discharge cycle based on a comparison result;
wherein the step of determining a charging mode of the battery before the $m^{th}$ charge and discharge cycle based on a comparison result comprises:

a first charging step, when the third cut-off voltage $V_3$ is less than the charging limit voltage $U_{cl}$ in the $n^{th}$ charge and discharge cycle, continuing constant-current charging the battery with the second charging current $I_n$ to the charging limit voltage $U_{cl}$, and constant-voltage charging the battery with the charging limit voltage $U_{cl}$ to the fully charged state, wherein $n \leq m-1$;
a second charging step, after entering a next charge and discharge cycle, constant-current charging the battery with the second charging current $I_n$ to the third state of charge $SOC_3$, wherein the battery has the corresponding third cut-off voltage $V_3$; and
a repeating step, repeating the first charging step and the second charging step until the third cut-off voltage $V_3$ is greater than or equal to the charging limit voltage $U_{cl}$.

8. The method according to claim 7, **characterized in that** the step of determining a charging mode of the battery before the $m^{th}$ charge and discharge cycle based on a comparison result further comprises:
when the third cut-off voltage $V_3$ is greater than or equal to the charging limit voltage $U_{cl}$, constant-voltage charging the battery with the third cut-off voltage $V_3$ to the fully charged state, obtaining the first state of charge $SOC_1$, and calculating the first charging current $I_m$.

9. The method according to any one of claims 1 to 8, **characterized in that** the method further comprises steps of:

obtaining a fourth state of charge $SOC_4$ of the battery that is constant-current charged until a battery voltage is the charging limit voltage $U_{cl}$ in the $n^{th}$ charge and discharge cycle;
comparing a magnitude of the third state of charge $SOC_3$ with that of the fourth state of charge $SOC_4$; and
determining a charging mode of the battery before the $m^{th}$ charge and discharge cycle based on a comparison result.

10. The method according to claim 9, **characterized in that** the step of determining a charging mode of the battery before the $m^{th}$ charge and discharge cycle based on a comparison result comprises:

a charging step, when the third state of charge $SOC_3$ is less than the fourth state of charge $SOC_4$ in the $n^{th}$ charge and discharge cycle, after entering a next charge and discharge cycle, constant-current charging the battery with the second charging current $I_n$ to the charging limit voltage $U_{cl}$, wherein the battery has the corresponding fourth state of charge $SOC_4$, and constant-voltage charging the battery with the charging limit voltage $U_{cl}$ to the fully charged state, wherein $n \leq m-1$; and
a repeating step, repeating the charging step until the third state of charge $SOC_3$ is greater than or equal to the fourth state of charge $SOC_4$.

11. The method according to claim 9 or 10, **characterized in that** the step of determining a charging mode of the battery before the $m^{th}$ charge and discharge cycle based on a comparison result comprises:
when the third state of charge $SOC_3$ is greater than or equal to the fourth state of charge $SOC_4$, obtaining the first state of charge $SOC_1$, and calculating the first charging current $I_m$.

12. An electronic apparatus (100), **characterized in that**, the electronic apparatus comprising:

a battery (13),
a charging system (10) and
a processor (11); wherein the battery (13) is connected to the processor (11) through the charging system (10) and, the processor (11) is configured to load and perform the method according to any one of claims 1 to 11.

13. A storage medium storing at least one computer instruction, **characterized in that** the computer instruction is loaded by a processor and used to perform the method according to any one of claims 1 to 11.

**Patentansprüche**

1. Verfahren zum Laden einer Batterie, **dadurch gekennzeichnet, dass** das Verfahren Folgendes umfasst:

in einem m-ten Lade- und Entladezyklus, Konstantstromladen der Batterie mit einem ersten Ladestrom $I_m$, bis ein erster Ladezustand $SOC_1$ der Batterie erreicht ist, wobei die Batterie eine entsprechende erste Abschaltspannung $V_1$ aufweist;
Konstantstromladen der Batterie mit einem zweiten Ladestrom $I_n$, bis ein zweiter Ladezustand $SOC_2$ der Batterie erreicht ist, wobei die Batterie am Ende des Konstantstromladens eine zweite Abschaltspannung $V_2$ aufweist, und Konstantspannungsladen der Batterie mit der zweiten Abschaltspannung $V_2$ bis zu einem vollgeladenen Zustand;
wobei $I_m = I_n + k \times I_n$, $0 < k \leq 1$, n eine Ganzzahl größer als oder gleich 0, m eine Ganzzahl größer als oder gleich 2 und mindestens um zwei größer als n ist und k in mindestens zwei Lade- und Entladezyklen unterschiedliche Werte aufweist;
$I_n$ ein Ladestrom der Batterie oder einer anderen Batterie ist, die das gleiche Modell wie die zu ladende Batterie aufweist, in einer Konstantstrom-Ladephase eines n-ten Lade- und Entladezyklus, oder ein voreingestellter Wert, und in der Konstantstrom-Ladephase des n-ten Lade- und Entladezyklus wird die Batterie nur mit dem zweiten Ladestrom $I_n$ bis zu einer Ladegrenzspannung $U_{cl}$ konstant geladen, oder die Batterie wird nur mit dem zweiten Ladestrom $I_n$ bis zu einem dritten Ladezustand $SOC_3$ konstant geladen und weist eine dem dritten Ladezustand $SOC_3$ entsprechende dritte Abschaltspannung $V_3$ auf; und
$SOC_1$ ein Ladezustand der Batterie oder einer anderen Batterie ist, die das gleiche Modell wie die geladene Batterie aufweist, die in einem (m-1) Lade- und Entladezyklus mit konstantem Strom auf die Ladegrenzspannung $U_{cl}$ geladen wird, wobei $SOC_1 \leq SOC_3 + S$, $SOC_3 - S \leq SOC_2 \leq SOC_3 + S \leq 100\%$ und $0 \leq S \leq 10\%$ aufweist.

2. Verfahren nach Anspruch 1, **dadurch gekennzeichnet, dass** $SOC_3$ ein Ladezustand einer anderen Batterie, die das gleiche Modell wie die geladene Batterie aufweist, am Ende der Konstantstrom-Ladephase des n-ten Lade- und Entladezyklus oder ein vorgegebener Wert ist.

3. Verfahren nach Anspruch 1 oder 2, **dadurch gekennzeichnet, dass** k die folgende Formel erfüllt: $k = k_1 \times m + k_2$,

wobei $0 \leq k_1 \leq 0.001$, und $0 \leq k_2 \leq 0.2$.

4. Verfahren nach einem der Ansprüche 1 bis 3, **dadurch gekennzeichnet, dass** der erste Ladestrom $I_m$ die folgende Formel erfüllt:

$I_m = I_n + (U_{m-1} - U_n)/R_a$, wobei $m > 1$; oder $I_m = I_{m-1} + (U_{m-1} - U_{m-2})/R_a$, wobei $m > 2$,
wobei $U_n$ ein erstes Anodenpotential der Batterie oder einer anderen mit der Batterie identischen Batterie ist, die im n-ten Lade- und Entladezyklus mit Konstantstrom auf die Ladegrenzspannung $U_{cl}$ geladen wird, $U_{m-1}$ ein zweites Anodenpotential der Batterie oder einer anderen mit der Batterie identischen Batterie ist, die im (m-1)-ten Lade- und Entladezyklus mit Konstantstrom auf die Ladegrenzspannung $U_{cl}$ geladen wird, $R_a$ die Anodenimpedanz der Batterie oder einer anderen Batterie ist, die mit der Batterie im n-ten Lade- und Entladezyklus identisch ist, $I_{m-1}$ ein Ladestrom der Batterie oder einer anderen Batterie ist, die mit der Batterie in einer Konstantstrom-Ladephase des (m-1)-ten Lade- und Entladezyklus identisch ist, oder ein voreingestellter Wert, und $U_{m-2}$ ein drittes Anodenpotential der Batterie oder einer anderen Batterie ist, die mit der Batterie identisch ist, die im (m-2)-ten Lade- und Entladezyklus mit Konstantstrom auf die Ladegrenzspannung $U_{cl}$ geladen wird.

5. Verfahren nach einem der Ansprüche 1 bis 4, **dadurch gekennzeichnet, dass**, wenn die Batterie mit Konstantstrom mit dem ersten Ladestrom $I_m$ auf den ersten Ladezustand $SOC_1$ geladen wird, eine Batteriekapazität $Q_m$ ist, wobei $Q_m = SOC_1 \times Q$ und $Q$ eine aktuelle tatsächliche Kapazität der Batterie ist.

6. Verfahren nach einem der Ansprüche 1 bis 5, **dadurch gekennzeichnet, dass** das Verfahren ferner, nach dem Konstantstromladen der Batterie mit dem ersten Ladestrom $I_m$ auf den ersten Ladezustand $SOC_1$: Konstantspannungsladen der Batterie mit der ersten Abschaltspannung $V_1$ auf den zweiten Ladestrom $I_n$ umfasst.

7. Verfahren nach einem der Ansprüche 1 bis 6, **dadurch gekennzeichnet, dass** das Verfahren ferner die folgenden Schritte umfasst:

Vergleichen einer Größe der dritten Abschaltspannung $V_3$ mit der der Ladegrenzspannung $U_{cl}$; und
Bestimmen eines Lademodus der Batterie vor dem m-ten Lade- und Entladezyklus basierend auf einem Vergleichsergebnis;
wobei der Schritt des Bestimmens eines Lademodus der Batterie vor dem m-ten Lade- und Entladezyklus basierend auf einem Vergleichsergebnis Folgendes umfasst:

einen ersten Ladeschritt, wenn die dritte Abschaltspannung $V_3$ im n-ten Lade- und Entladezyklus kleiner als die Ladegrenzspannung $U_{cl}$ ist, Fortsetzen des Konstantstromladens der Batterie mit dem zweiten Ladestrom $I_n$ bis zur Ladegrenzspannung $U_{cl}$ und Konstantspannungsladen der Batterie mit der Ladegrenzspannung $U_{cl}$ bis zum vollständig geladenen Zustand, wobei $n \leq m-1$;
einem zweiten Ladeschritt, nach Eintritt in einen nächsten Lade- und Entladezyklus, Konstantstromladen der Batterie mit dem zweiten Ladestrom $I_n$ auf den dritten Ladezustand $SOC_3$, wobei die Batterie die entsprechende dritte Abschaltspannung $V_3$ aufweist; und
einen Wiederholungsschritt, bei dem der erste Ladeschritt und der zweite Ladeschritt wiederholt werden, bis die dritte Abschaltspannung $V_3$ größer oder gleich der Ladegrenzspannung $U_{cl}$ ist.

8. Verfahren nach Anspruch 7, **dadurch gekennzeichnet, dass** der Schritt, einen Lademodus der Batterie vor dem m-ten Lade- und Entladezyklus basierend auf einem Vergleichsergebnis zu bestimmen, ferner Folgendes umfasst: wenn die dritte Abschaltspannung $V_3$ größer oder gleich der Ladegrenzspannung $U_{cl}$ ist, Konstantspannungsladen der Batterie mit der dritten Abschaltspannung $V_3$ bis zum vollgeladenen Zustand, Ermitteln des ersten Ladezustandes $SOC_1$ und Berechnen des ersten Ladestroms $I_m$.

9. Verfahren nach einem der Ansprüche 1 bis 8, **dadurch gekennzeichnet, dass** das Verfahren ferner die folgenden Schritte umfasst:

Ermitteln eines vierten Ladezustands $SOC_4$ der Batterie, die mit Konstantstrom geladen wird, bis eine Batteriespannung die Ladegrenzspannung $U_{cl}$ im n-ten Lade- und Entladezyklus erreicht;
Vergleichen einer Größe des dritten Ladezustands $SOC_3$ mit der des vierten Ladezustands $SOC_4$; und
Bestimmen eines Lademodus der Batterie vor dem m-ten Lade- und Entladezyklus basierend auf einem Vergleichsergebnis.

10. Verfahren nach Anspruch 9, **dadurch gekennzeichnet, dass** der Schritt des Bestimmens eines Lademodus der Batterie vor dem m-ten Lade- und Entladezyklus basierend auf einem Vergleichsergebnis Folgendes umfasst:

einen Ladeschritt, wenn der dritte Ladezustand $SOC_3$ kleiner ist als der vierte Ladezustand $SOC_4$ im n-ten Lade- und Entladezyklus, nach Eintritt in einen nächsten Lade- und Entladezyklus, Konstantstromladen der Batterie mit dem zweiten Ladestrom $I_n$ auf die Ladegrenzspannung $U_{cl}$, wobei die Batterie den entsprechenden vierten Ladezustand $SOC_4$ aufweist, und Konstantspannungsladen der Batterie mit der Ladegrenzspannung $U_{cl}$ bis zum vollgeladenen Zustand, wobei $n \leq m-1$; und
einen Wiederholungsschritt, bei dem der Ladeschritt wiederholt wird, bis der dritte Ladezustand $SOC_3$ größer oder gleich dem vierten Ladezustand $SOC_4$ ist.

11. Verfahren nach Anspruch 9 oder 10, **dadurch gekennzeichnet, dass** der Schritt des Bestimmens eines Lademodus der Batterie vor dem m-ten Lade- und Entladezyklus basierend auf einem Vergleichsergebnis Folgendes umfasst: wenn der dritte Ladezustand $SOC_3$ größer oder gleich dem vierten Ladezustand $SOC_4$ ist, Ermitteln des ersten Ladezustands $SOC_1$ und Berechnen des ersten Ladestroms $I_m$.

12. Elektronisches Gerät (100), **dadurch gekennzeichnet, dass** das elektronische Gerät Folgendes umfasst:

eine Batterie (13),
ein Ladesystem (10) und
einen Prozessor (11), wobei die Batterie (13) über das Ladesystem (10) mit dem Prozessor (11) verbunden ist und der Prozessor (11) konfiguriert ist, um das Verfahren nach einem der Ansprüche 1 bis 11 zu laden und auszuführen.

13. Speichermedium, das mindestens eine Computeranweisung speichert, **dadurch gekennzeichnet, dass** die Computeranweisung von einem Prozessor gespeichert und verwendet wird, um das Verfahren nach einem der Ansprüche 1 bis 11 auszuführen.

**Revendications**

1. Méthode de chargement d'une batterie, **caractérisée en ce que** la méthode comprend

au cours d'un $m^{ième}$ cycle de charge et de décharge, chargement de la batterie à courant constant avec un premier courant de charge $I_m$ jusqu'à ce qu'un premier état de charge $SOC_1$ de la batterie soit atteint, dans lequel la batterie a une première tension de coupure $V_1$ correspondante ; chargement de la batterie à courant constant avec un deuxième courant de charge $I_n$ jusqu'à ce qu'un deuxième état de charge $SOC_2$ de la batterie soit atteint, dans lequel la batterie a une deuxième tension de coupure $V_2$ à la fin de la charge à courant constant, et chargement de la batterie à tension constante avec la deuxième tension de coupure $V_2$ jusqu'à un état de charge complète ;
dans laquelle $I_m = I_n + k \times I_n$, $0 < k \leq 1$, n est un nombre entier supérieur ou égal à 0, m est un nombre entier supérieur ou égal à 2 et supérieur à n d'au moins deux, et k a des valeurs différentes dans au moins deux cycles de charge et de décharge ;
$I_n$ est un courant de charge de la batterie ou d'une autre batterie, qui a le même modèle que la batterie en charge, dans une phase de charge à courant constant d'un $n^{ième}$ cycle de charge et de décharge, ou une valeur prédéfinie, et dans la phase de charge à courant constant du $n^{ième}$ cycle de charge et de décharge, la batterie est chargée à courant constant uniquement avec le deuxième courant de charge $I_n$ jusqu'à une tension limite de charge $U_{cl}$, ou la batterie est chargée à courant constant uniquement avec le deuxième courant de charge $I_n$ jusqu'à un troisième état de charge $SOC_3$, et a une troisième tension de coupure $V_3$ correspondant à l'état de charge $SOC_3$ ; et
$SOC_1$ est un état de charge de la batterie ou d'une autre batterie, qui a le même modèle que la batterie en charge, qui est chargée à courant constant jusqu'à la tension limite de charge $U_{cl}$ dans un $(m-1)^{ième}$ cycle de charge et de décharge, dans laquelle $SOC_1 \leq SOC_3 + S$, $SOC_3 - S \leq SOC_2 \leq SOC_3 + S \leq 100\%$, et $0 \leq S \leq 10\%$.

2. Méthode selon la revendication 1, **caractérisée en ce que** $SOC_3$ est un état de charge d'une autre batterie, qui a le même modèle que la batterie en charge, à la fin de la phase de charge à courant constant du $n^{ième}$ cycle de charge et de décharge, ou une valeur prédéfinie.

3. Méthode selon la revendication 1 ou 2, **caractérisée en ce que** k satisfait à la formule suivante : $k=k_1 \times m+k_2$, dans laquelle $0 \le k1 \le 0.001$, et $0 \le k_2 \le 0.2$.

4. Méthode selon l'une quelconque des revendications 1 à 3, **caractérisée en ce que** le premier courant de charge $I_m$ satisfait à la formule suivante :

$I_m = I_n + (U_{m-1} - U_n)/R_a$, dans laquelle m> 1 ; ou $I_m = I_{m-1} + (U_{m-1} - U_{m-2})/R_a$, dans laquelle m>2,
dans laquelle $U_n$ est un premier potentiel d'anode de la batterie ou d'une autre batterie identique à la batterie qui est chargée à courant constant jusqu'à la tension limite de charge $U_{cl}$ dans le $n^{ième}$ cycle de charge et de décharge, $U_{m-1}$ est un deuxième potentiel d'anode de la batterie ou d'une autre batterie identique à la batterie qui est chargée à courant constant jusqu'à la tension limite de charge $U_{cl}$ dans le $(m-1)^{ième}$ cycle de charge et de décharge, $R_a$ est l'impédance d'anode de la batterie ou d'une autre batterie identique à la batterie dans le $n^{ième}$ cycle de charge et de décharge, $I_{m-1}$ est un courant de charge de la batterie ou d'une autre batterie identique à la batterie dans une phase de charge à courant constant du $(m-1)^{ième}$ cycle de charge et de décharge, ou une valeur prédéfinie, et $U_{m-2}$ est un troisième potentiel d'anode de la batterie ou d'une autre batterie identique à la batterie qui est chargée à courant constant jusqu'à la tension limite de charge $U_{cl}$ dans le $(m-2)^{ième}$ cycle de charge et de décharge.

5. Méthode selon l'une quelconque des revendications 1 à 4, **caractérisée en ce que** lorsque la batterie est chargée à courant constant avec le premier courant de charge $I_m$ jusqu'au premier état de charge $SOC_1$, la capacité de la batterie est $Q_m$, dans laquelle $Q_m = SOC_1 \times Q$, et Q est la capacité actuelle réelle de la batterie.

6. Méthode selon l'une quelconque des revendications 1 à 5, **caractérisée en ce que** la méthode comprend en outre, après avoir chargé la batterie à courant constant avec le premier courant de charge $I_m$ jusqu'au premier état de charge $SOC_1$ : chargement de la batterie à tension constante avec la première tension de coupure $V_1$ jusqu'au deuxième courant de charge $I_n$.

7. Méthode selon l'une quelconque des revendications 1 à 6, **caractérisée en ce que** la méthode comprend en outre les étapes suivantes :

comparaison de l'ampleur de la troisième tension de coupure $V_3$ avec celle de la tension limite de charge $U_{cl}$ ; et
détermination d'un mode de charge de la batterie avant le $m^{ième}$ cycle de charge et de décharge sur la base d'un résultat de comparaison ;
dans laquelle l'étape de détermination d'un mode de charge de la batterie avant le $m^{ième}$ cycle de charge et de décharge sur la base d'un résultat de comparaison comprend :

une première étape de charge, lorsque la troisième tension de coupure $V_3$ est inférieure à la tension limite de charge $U_{cl}$ dans le $n^{ième}$ cycle de charge et de décharge, poursuite de la charge à courant constant de la batterie avec le deuxième courant de charge $I_n$ jusqu'à la tension limite de charge $U_{cl}$, et chargement de la batterie à tension constante avec la tension limite de charge $U_{cl}$ jusqu'à l'état de charge complète, dans lequel $n \le m-1$ ;
une deuxième étape de charge, après avoir entamé un cycle de charge et de décharge suivant, chargement de la batterie à courant constant avec le deuxième courant de charge $I_n$ jusqu'au troisième état de charge $SOC_3$, dans lequel la batterie a la troisième tension de coupure $V_3$ correspondante ; et
une étape de répétition, répétition de la première étape de charge et la deuxième étape de charge jusqu'à ce que la troisième tension de coupure $V_3$ soit supérieure ou égale à la tension limite de charge $U_{cl}$.

8. Méthode selon la revendication 7, **caractérisée en ce que** l'étape de détermination d'un mode de charge de la batterie avant le $m^{ième}$ cycle de charge et de décharge sur la base d'un résultat de comparaison comprend en outre :
lorsque la troisième tension de coupure $V_3$ est supérieure ou égale à la tension limite de charge $U_{cl}$, chargement de la batterie à tension constante avec la troisième tension de coupure $V_3$ jusqu'à l'état de charge complète, obtention du premier état de charge $SOC_1$, et calcul du premier courant de charge $I_m$.

9. Méthode selon l'une quelconque des revendications 1 à 8, **caractérisée en ce que** la méthode comprend en outre les étapes suivantes :

obtention d'un quatrième état de charge $SOC_4$ de la batterie qui est chargée à courant constant jusqu'à ce que la tension de la batterie soit la tension limite de charge $U_{cl}$ au cours du $n^{ième}$ cycle de charge et de décharge ;

comparaison de l'ampleur du troisième état de charge $SOC_3$ avec celle du quatrième état de charge $SOC_4$ ; et détermination d'un mode de charge de la batterie avant le $m^{\text{ième}}$ cycle de charge et de décharge sur la base d'un résultat de comparaison.

**10.** Méthode selon la revendication 9, **caractérisée en ce que** l'étape de détermination d'un mode de charge de la batterie avant le $m^{\text{ième}}$ cycle de charge et de décharge sur la base d'un résultat de comparaison comprend :

une étape de charge, lorsque le troisième état de charge $SOC_3$ est inférieur au quatrième état de charge $SOC_4$ dans le $n^{\text{ième}}$ cycle de charge et de décharge, après avoir entamé un cycle de charge et de décharge suivant, chargement de la batterie à courant constant avec le deuxième courant de charge $I_n$ jusqu'à la tension limite de charge $U_{cl}$, dans laquelle la batterie a le quatrième état de charge $SOC_4$ correspondant, et chargement de la batterie à tension constante avec la tension limite de charge $U_{cl}$ jusqu'à l'état de charge complète, dans lequel $n \leq m-1$ ; et

une étape de répétition, répétition de l'étape de charge jusqu'à ce que le troisième état de charge $SOC_3$ soit supérieur ou égal au quatrième état de charge $SOC_4$.

**11.** Méthode selon la revendication 9 ou 10, **caractérisée en ce que** l'étape de détermination d'un mode de charge de la batterie avant le $m^{\text{ième}}$ cycle de charge et de décharge sur la base d'un résultat de comparaison comprend : lorsque le troisième état de charge $SOC_3$ est supérieur ou égal au quatrième état de charge $SOC_4$, obtention du premier état de charge $SOC_1$, et calcul du premier courant de charge $I_m$.

**12.** Appareil électronique (100), **caractérisé en ce que** l'appareil électronique comprend

une batterie (13),
un système de charge (10) et
un processeur (11) ; dans lequel la batterie (13) est connectée au processeur (11) par l'intermédiaire du système de charge (10) et, le processeur (11) est configuré pour charger et exécuter la méthode selon l'une quelconque des revendications 1 à 11.

**13.** Support de stockage stockant au moins une instruction informatique, **caractérisé en ce que** l'instruction informatique est chargée par un processeur et utilisée pour exécuter la méthode selon l'une quelconque des revendications 1 à 11.

FIG. 1

In the $m^{th}$ charge and discharge cycle, constant-current charge a battery with a first charging current to a first state of charge — S21

↓

Constant-current charge the battery with a second charging current to a second state of charge — S22

↓

Constant-voltage charge the battery with a second cut-off voltage to a fully charged state — S23

FIG. 2

Obtain a first anode potential of a battery or another battery identical to the battery that is constant-current charged to a charging limit voltage in the $n^{th}$ charge and discharge cycle — S31

↓

Obtain a second anode potential of the battery or the another battery identical to the battery that is constant-current charged to the charging limit voltage in the $(m-1)^{th}$ charge and discharge cycle — S32

↓

Calculate a first charging current of the battery in the $m^{th}$ charge and discharge cycle based on the first anode potential, the second anode potential, anode impedance, and a second charging current — S33

FIG. 3

Obtain a third charging current of a battery or another battery identical to the battery in a constant-current charging phase of the $(m-1)^{th}$ charge and discharge cycle ⟋ S41

Obtain a second anode potential of the battery or the another battery identical to the battery that is constant-current charged to the charging limit voltage in the $(m-1)^{th}$ charge and discharge cycle ⟋ S42

Obtain a third anode potential of the battery or the another battery identical to the battery that is constant-current charged to the charging limit voltage in the $(m-2)^{th}$ charge and discharge cycle ⟋ S43

Calculate a first charging current of the battery in the $m^{th}$ charge and discharge cycle based on the second anode potential, the third anode potential, anode impedance, and the third charging current ⟋ S44

FIG. 4

Compare a magnitude of a third cut-off voltage with that of a charging limit voltage to obtain a comparison result ⟋ S51

Determine a charging mode of a battery before the $m^{th}$ charge and discharge cycle based on the comparison result ⟋ S52

FIG. 5

Obtain a fourth state of charge of a battery that is constant-current charged until a battery voltage is a charging limit voltage in the $n^{th}$ charge and discharge cycle

S61

Compare a magnitude of a third state of charge with that of the fourth state of charge

S62

Determine a charging mode of the battery before the $m^{th}$ charge and discharge cycle based on a comparison result

S63

FIG. 6

In the m<sup>th</sup> charge and discharge cycle, constant-current charge a battery with a first charging current to a first cut-off voltage ⟋ S71

Constant-current charge the battery with a second charging current to a second cut-off voltage ⟋ S72

Constant-voltage charge the battery with the second cut-off voltage to a fully charged state ⟋ S73

FIG. 7

Obtain battery impedance of a battery in the (m-1)<sup>th</sup> charge and discharge cycle ⟋ S81

Determine a first cut-off voltage of the battery based on a charging limit voltage, the battery impedance, a first charging current, and a second charging current ⟋ S82

FIG. 8

Obtain a first open-circuit voltage of a battery or another battery identical to the battery at the end of a constant-current charging phase of the $x^{th}$ charge and discharge cycle — S91

Obtain an impedance growth rate of the battery or the another battery identical to the battery — S92

Calculate a second cut-off voltage based on the open-circuit voltage and the impedance growth rate — S93

FIG. 9

Obtain a second open-circuit voltage of a battery or another battery identical to the battery at the end of a constant-current charging phase of the $y^{th}$ charge and discharge cycle — S101

Obtain an impedance growth rate of the battery or the another battery identical to the battery — S102

Calculate a third cut-off voltage based on the open-circuit voltage and the impedance growth rate — S103

FIG. 10

| Charging system | 10 |
| Obtaining module | 101 |
| Comparing module | 102 |
| Determining module | 103 |
| Constant-current charging module | 104 |
| Constant-voltage charging module | 105 |

FIG. 11

**REFERENCES CITED IN THE DESCRIPTION**

**Patent documents cited in the description**

- EP 2947748 A
- US 20140320089 A
- CN 105552465
- US 20150123621 A